# EUROPEAN PATENT APPLICATION

(11) **EP 4 340 272 A1**
(43) Date of publication of application: **20.03.2024**
(21) Application number: 22815117.1
(22) Date of filing: 25.05.2022
(51) Int. Cl.: H04L 1/18

(54) **PDSCH PROCESSING TIME DETERMINATION METHOD, AND COMMUNICATION APPARATUS**

(30) Priority: 31.05.2021 CN 202110604679
(71) Applicant: Huawei Technologies Co., Ltd., Longgang Shenzhen, Guangdong 518129 (CN)
(72) Inventor: GAO, Fei, Shenzhen, Guangdong 518129 (CN); JIAO, Shurong, Shenzhen, Guangdong 518129 (CN); LIU, Xianda, Shenzhen, Guangdong 518129 (CN); HUA, Meng, Shenzhen, Guangdong 518129 (CN)
(74) Representative: Gill Jennings & Every LLP
(86) International application number: PCT/CN2022/094967
(87) International publication number: WO 2022/253071

(57) **Abstract**

Embodiments of this application provide a method for determining PDSCH processing time and a communication apparatus, and relate to the field of communication technologies. A first communication apparatus may receive first downlink control information and second downlink control information that are from a second communication apparatus, where the first downlink control information is carried by using a first PDCCH candidate, the second downlink control information is carried by using a second PDCCH candidate, the first downlink control information and the second downlink control information are for PDCCH repeated transmission, and start time units of the first PDCCH candidate and the second PDCCH candidate may be different, receive first indication information from the second communication apparatus, where the first indication information indicates a location of a start time unit and a quantity of occupied time units that are of a physical downlink shared channel PDSCH, and determine a quantity of processing time units of the PDSCH based on different PDCCH candidates, to ensure that the first communication apparatus performs reliable uplink scheduling.

## Description

### CROSS-REFERENCE TO RELATED APPLICATIONS

This application claims priority to Chinese Patent Application No. 202110604679.5, filed with the China National Intellectual Property Administration on May 31, 2021 and entitled "METHOD FOR DETERMINING PDSCH PROCESSING TIME AND COMMUNICATION APPARATUS", which is incorporated herein by reference in its entirety.

### TECHNICAL FIELD

Embodiments of this application relate to the field of communication technologies, and in particular, to a method for determining physical downlink shared channel (physical downlink shared channel, PDSCH) processing time and a communication apparatus.

### BACKGROUND

In a communication system, a network device may send downlink control information (downlink control information, DCI) to a terminal device through a physical downlink control channel (physical downlink control channel, PDCCH). The network device may schedule a PDCSH by using the DCI, and indicate, by using the DCI, the terminal device to feed back, on a physical uplink control channel (physical uplink control channel, PUCCH), a quantity of bits of hybrid automatic repeat request (hybrid automatic repeat request, HARQ) information corresponding to the PDCSH.

Usually, the terminal device may determine start time of the PDSCH based on information about a time domain resource occupied by the PDCCH, and determine PDSCH processing time based on information such as length information of a time domain resource occupied by the PDSCH and a data processing capability of the terminal device. After PDSCH processing is completed, the terminal device feeds back HARQ-acknowledgement (acknowledgement, ACK) information through the PUCCH.

However, in a discussion of NR Rel-17, PDCCH repeated transmission is introduced, and communication becomes complex. In a case of the PDCCH repeated transmission, a plurality of PDCCH candidates may be included. If the PDSCH processing time cannot be accurately determined, there may be a case in which a time point at which the network device schedules an uplink feedback is earlier than a time point at which the terminal device processes the PDSCH, and the terminal device cannot complete the uplink feedback.

### SUMMARY

This application provides a method for determining PDSCH processing time and a communication apparatus, to ensure that a time point at which a network device schedules an uplink feedback is not earlier than a time point at which a terminal device processes a PDSCH, and ensure reliability of information transmission.

According to a first aspect, this application provides a method for determining PDSCH processing time. The method may be implemented through interaction between a network device and a terminal device, or may be separately implemented by the network device or the terminal device. The network device is, for example, a transmission reception point (transmission reception point, TRP) or a 5G 5th generation mobile communication technology (5th generation mobile communication technology, 5G) base station (gNodeB, gNB), or may be understood as a module (for example, a chip) in the network device. The terminal device is, for example, user equipment (user equipment, UE) or a vehicle-mounted device, or may be understood as a module (for example, a chip) in the terminal device. This is not specifically limited in this application.

When performing the method for determining the PDSCH processing time in this application, the network device may send first downlink control information and second downlink control information to the terminal device, where the first downlink control information is carried by using a first PDCCH candidate, the second downlink control information is carried by using a second PDCCH candidate, the first downlink control information and the second downlink control information are same downlink control information, and a start time unit of the first PDCCH candidate is not later than a start time unit of the second PDCCH candidate. Correspondingly, the terminal device receives the first downlink control information and the second downlink control information that are from the network device. The first downlink control information and the second downlink control information may include first indication information. Correspondingly, the terminal device determines the first indication information from the network device, where the first indication information indicates a location of a start time unit and a quantity of occupied time units that are of a physical downlink shared channel PDSCH. That the start time unit of the PDSCH is not earlier than the start time unit of the first PDCCH candidate may alternatively be understood as that the start time unit of the first PDCCH candidate is not later than the start time unit of the PDSCH. Both the terminal device and the network device may determine that a quantity of time units occupied from the location of the start time unit of the PDSCH to an end time unit of the second PDCCH candidate is L', where L' is a positive integer, and determine a quantity of processing time units of the PDSCH based on L'. However, the terminal device and the network device determine the quantity of processing time units of the PDSCH at different occasions. The network device has determined the quantity of processing time units of the PDSCH before sending the first downlink control information and the second downlink control information to the terminal device, and the terminal device determines the quantity of processing time units of the PDSCH after obtaining the first indication information. The network device may indicate, based on the determined quantity of processing time units of the PDSCH, the terminal device to feed back HARQ-ACK information in a specified time unit through a PUCCH. In addition, it may be understood that the first downlink control information and the second downlink control information may include second indication information. After receiving the first downlink control information and the second downlink control information, the terminal device parses the control information to obtain data location information, that is, a time unit that is indicated by the network device and in which the HARQ-ACK information is fed back through the PUCCH. The terminal device may determine, based on the determined quantity of processing time units of the PDSCH, whether to feed back the HARQ-ACK information through the PUCCH based on the indication information of the network device.

It should be noted that the network device is a communication apparatus different from the terminal device, but a quantity of the network device is not limited. For example, in a single-station communication scenario, the network device is used as a single-station network device. However, in a multi-station communication scenario (for example, a multi-transmission reception point multi-TRP scenario), there may be a plurality of network devices, which are used as a plurality of network devices of a plurality of stations. In this case, sending of the first downlink control information and the second downlink control information may be performed by different network devices.

It should be further noted that, that the first downlink control information and the second downlink control information are for PDCCH repeated transmission may be understood as that the first downlink control information and the second downlink control information are for transmitting same downlink control information, may be understood as that information formats of the first downlink control information and the second downlink control information are the same, or may be understood as that the first downlink control information and the second downlink control information indicate same scheduling. For example, both are for scheduling a same PDSCH. The same PDSCH may be understood as PDSCHs with same load, PDSCHs at a same time-frequency location, or one same PDSCH. The PDCCH repeated transmission may alternatively be understood as PDCCH repeated transmission in a communication protocol. This is not limited in this application. It should be further noted that the time unit may be understood as a slot, a subframe, an orthogonal frequency division multiplexing (orthogonal frequency division multiplexing, OFDM) symbol, or the like. This is not specifically limited in this application, and a format of the time unit may be flexibly selected with reference to an actual application.

In addition, that the start time unit of the first PDCCH candidate is not later than the start time unit of the second PDCCH candidate may be understood as that a start OFDM symbol of the first PDCCH candidate is the same as a start OFDM symbol of the second PDCCH candidate, or a start OFDM symbol of the first PDCCH candidate is before a start OFDM symbol of the second PDCCH candidate. For example, the start OFDM symbol of the first PDCCH candidate is a symbol 3, the start OFDM symbol of the second PDCCH candidate is 5, and the symbol 3 is before the symbol 5. In addition, if the start OFDM symbol of the first PDCCH candidate is the same as the start OFDM symbol of the second PDCCH candidate, it may be understood as that the first PDCCH candidate and the second PDCCH candidate overlap (where if quantities of time units occupied by the first PDCCH candidate and the second PDCCH candidate are also the same, it may be understood as that the first PDCCH candidate and the second PDCCH candidate completely overlap, or if quantities of time units occupied by the first PDCCH candidate and the second PDCCH candidate are different, it may be understood as that the first PDCCH candidate and the second PDCCH candidate partially overlap). Either of the PDCCH candidates can be used as a reference for the PDSCH to determine the start time unit.

In addition, the first indication information may alternatively be carried in the first downlink control information and the second downlink control information, for example, DCI, or may be carried in other control information, for example, radio resource control (radio resource control, RRC) information. This is not specifically limited in this application. It should be further noted that the quantity of processing time units of the PDSCH may be understood as a quantity of time units occupied by the terminal device to start channel estimation, data processing, and the like after the first downlink control information and the second downlink control information are demodulated. After the processing time unit of the PDSCH ends, the HARQ information is fed back through the PUCCH. In addition, a start time unit of the processing time unit of the PDSCH is one or more time units after an end time unit of the PDSCH. For example, the end time unit of the PDSCH is the OFDM symbol 3, and the start time unit of the processing time unit of the PDSCH may be the OFDM symbol 5. This is merely an example for description, and is not specifically limited herein.

In this application, the start time unit of the PDSCH is determined based on an early-start PDCCH candidate. When the quantity of processing time units of the PDSCH is determined, the quantity of processing time units of the PDSCH is determined by defining the quantity of time units occupied from the location of the start time unit of the PDSCH to the end time unit of the second PDCCH candidate, so that delay impact caused by a late-start PDCCH candidate on the PDSCH processing time is resolved. In this way, the terminal device and the network device have a consistent understanding of the quantity of processing time units of the PDSCH, to ensure that a time point at which the network device schedules an uplink feedback is not earlier than a time point at which the terminal device processes the PDSCH, thereby ensuring robustness of the PDCCH repeated transmission.

In an optional manner, the network device sends a higher layer parameter referenceOfSLIVDCI-1-2, and correspondingly, the terminal device receives the higher layer parameter referenceOfSLIVDCI-1-2.

In an optional manner, the time unit is the OFDM symbol, and the PDSCH, the first downlink control information, and the second downlink control information are in a same slot.

In an optional manner, formats of the first downlink control information and the second downlink control information are DCI formats 1_2, and a cyclic redundancy check of the DCI format 1_2 is scrambled by one or more of the following radio network temporary identifiers: a cell radio network temporary identifier (cell radio network temporary identifier, C-RNTI), a modulation coding scheme cell radio network temporary identifier (modulation coding scheme cell radio network temporary identifier, MCS-C-RNTI), and a configured scheduling radio network temporary identifier (configured scheduling radio network temporary identifier, CS-RNTI).

In an optional manner, the end time unit of the PDSCH is not later than the end time unit of the second PDCCH candidate, and the quantity of processing time units of the PDSCH is a sum of a first preset value and L'.

It should be noted that the end time unit of the PDSCH is the same as the end time unit of the second PDCCH candidate or is before the end time unit of the second PDCCH candidate. The quantity of processing time units of the PDSCH is the sum of the first preset value and L', where the first preset value is determined based on a communication protocol specification, and is related to a capability of the terminal device. A unit of the first preset value is also a time unit, is usually N₁ in the communication protocol, and may be determined based on the communication protocol specification in the actual application. This is not specifically limited in this application. The quantity of processing time units of the PDSCH is determined by introducing L', so that the delay impact caused by the late-start PDCCH candidate on the PDSCH processing time is resolved. In this way, the terminal device and the network device have the consistent understanding of the quantity of processing time units of the PDSCH, to ensure that the terminal device may complete data processing within newly defined PDSCH processing time under the impact of the late-start PDCCH candidate, thereby ensuring the robustness of the PDCCH repeated transmission.

In an optional manner, the end time unit of the PDSCH is later than the end time unit of the second PDCCH candidate. Being under a first PDSCH processing capability of the terminal device may alternatively be understood as that the network device configures a configuration of disabling the first PDSCH processing capability in a serving cell. For example, as defined in the communication protocol 38.331, the network device disables a higher layer parameter processingType2Enabled. The terminal device or the network device may determine the quantity of processing time units of the PDSCH based on L and L', where L is the quantity of time units occupied by the PDSCH.

In this manner, the terminal device or the network device determines the quantity of processing time units of the PDSCH, so that the delay impact caused by the late-start PDCCH candidate on the PDSCH processing time is resolved. In this way, the terminal device and the network device have the consistent understanding of the quantity of processing time units of the PDSCH, to ensure that the terminal device may complete the data processing within the newly defined PDSCH processing time under the impact of the late-start PDCCH candidate, ensure that the time point at which the network device schedules the uplink feedback is not earlier than the time point at which the terminal device processes the PDSCH, and ensure the robustness of the PDCCH repeated transmission.

In an optional manner, if L≥7, the quantity of processing time units of the PDSCH is the sum of the first preset value and L'. If 4≤L≤6, the quantity of processing time units of the PDSCH is a sum of the first preset value and a second value, where the second value is max(7-L, L'). If L=3, the quantity of processing time units of the PDSCH is a sum of the first preset value and a third value, where the third value is max(3+min(d, 1), L'). If L=2, the quantity of processing time units of the PDSCH is a sum of the first preset value and a fourth value, where the fourth value is max(3+d, L'), and d indicates a quantity of time units in which the PDSCH and the first PDCCH candidate and/or the second PDCCH candidate overlap.

In an optional manner, the end time unit of the PDSCH is later than the end time unit of the second PDCCH candidate. Being under a second PDSCH processing capability of the terminal device may alternatively be understood as that the network device configures a configuration of enabling the second PDSCH processing capability in the serving cell. For example, as defined in the communication protocol 38.331, the network device enables the higher layer parameter processingType2Enabled. The terminal device or the network device may determine the quantity of processing time units of the PDSCH based on the sum of the first preset value and L'.

In this manner, the terminal device or the network device determines the quantity of processing time units of the PDSCH, so that the delay impact caused by the late-start PDCCH candidate on the PDSCH processing time is resolved. In this way, the terminal device and the network device have the consistent understanding of the quantity of processing time units of the PDSCH, to ensure that the terminal device may complete the data processing within the newly defined PDSCH processing time under the impact of the late-start PDCCH candidate, ensure that the time point at which the network device schedules the uplink feedback is not earlier than the time point at which the terminal device processes the PDSCH, and ensure the robustness of the PDCCH repeated transmission.

In an optional manner, the network device may send the second indication information to the terminal device. Correspondingly, the terminal device may receive the second indication information from the network device. The second indication information indicates the terminal device to send the PUCCH. The PUCCH is used to carry the HARQ-ACK information of the PDSCH. If the terminal device determines, based on the quantity of processing time units of the PDSCH, that a start time unit of the PUCCH is not earlier than a time unit determined based on the quantity of processing time units of the PDSCH, the terminal device sends the HARQ-ACK information of the PDSCH based on the second indication information. If the terminal device determines, based on the quantity of processing time units of the PDSCH, that a start time unit of the PUCCH is earlier than the time unit determined based on the quantity of processing time units of the PDSCH, the terminal device does not send the HARQ-ACK information of the PDSCH.

It should be noted that the second indication information may be indicated by using the first downlink control information and/or the second downlink control information, or may be indicated by using other control information. This is not specifically limited in this application. In this manner, the terminal device may determine, based on the determined quantity of processing time units of the PDSCH, whether to feed back the HARQ-ACK information based on the second indication information of the network device. In this manner, the terminal device or the network device determines the quantity of processing time units of the PDSCH, so that the delay impact caused by the late-start PDCCH candidate on the PDSCH processing time is resolved. In this way, the terminal device and the network device have the consistent understanding of the quantity of processing time units of the PDSCH, to ensure that the terminal device may complete the data processing within the newly defined PDSCH processing time under the impact of the late-start PDCCH candidate, ensure that the time point at which the network device schedules the uplink feedback is not earlier than the time point at which the terminal device processes the PDSCH, and ensure the robustness of the PDCCH repeated transmission.

According to a second aspect, this application provides a method for determining PDSCH processing time. The method may be implemented through interaction between a network device and a terminal device, or may be separately implemented by the network device or the terminal device. The network device is, for example, a TRP or a gNB, or may be understood as a module (for example, a chip) in the network device. The terminal device is, for example, UE or a vehicle-mounted device, or may be understood as a module (for example, a chip) in the terminal device. This is not specifically limited in this application.

When performing the method for determining the PDSCH processing time in this application, the network device may send first downlink control information and second downlink control information to the terminal device, where the first downlink control information is carried by using a first PDCCH candidate, the second downlink control information is carried by using a second PDCCH candidate, the first downlink control information and the second downlink control information are same downlink control information, and an end time unit of the first PDCCH candidate is not earlier than an end time unit of the second PDCCH candidate. Correspondingly, the terminal device receives the first downlink control information and the second downlink control information that are from the network device. Then, the network device further sends first indication information to the terminal device. Correspondingly, the terminal device receives the first indication information from the network device. The first indication information indicates a location of a start time unit and a quantity of occupied time units that are of a PDSCH. The first downlink control information and the second downlink control information include the first indication information, and the first indication information indicates the location of the start time unit and the quantity of occupied time units that are of the PDSCH. The start time unit of the PDSCH is determined based on a PDCCH candidate whose start time is later in the first PDCCH candidate and the second PDCCH candidate. A mapping type (mapping type) of the PDSCH is a mapping type B. The terminal device or the network device determines, based on the location of the start time unit and the quantity of occupied time units that are of the PDSCH, a quantity of time units in which the PDSCH and the first PDCCH candidate overlap, and determines a quantity of processing time units of the PDSCH based on the quantity of overlapping time units. However, the terminal device and the network device determine the quantity of processing time units of the PDSCH at different occasions. The network device has determined the quantity of processing time units of the PDSCH before sending the first downlink control information and the second downlink control information to the terminal device, and the terminal device determines the quantity of processing time units of the PDSCH after obtaining the first indication information.

In this application, the start time unit of the PDSCH is determined based on the late-start PDCCH candidate. The quantity of processing time units of the PDSCH is determined based on the quantity of time units in which the PDSCH and the late-end first PDCCH candidate overlap. The terminal device or the network device determines the quantity of processing time units of the PDSCH, so that delay impact caused by the late-start PDCCH candidate on the PDSCH processing time is resolved. In this way, the terminal device and the network device have a consistent understanding of the quantity of processing time units of the PDSCH, to ensure that the terminal device may complete data processing within newly defined PDSCH processing time under the impact of the late-start PDCCH candidate, ensure that a time point at which the network device schedules an uplink feedback is not earlier than a time point at which the terminal device processes the PDSCH, and ensure robustness of PDCCH repeated transmission.

It should be noted that the network device is a communication apparatus different from the terminal device, but a quantity of the network device is not limited. For example, in a single-station communication scenario, the network device is used as a single-station network device. However, in a multi-station communication scenario (for example, a multi-transmission reception point multi-TRP scenario), there may be a plurality of network devices, which are used as a plurality of network devices of a plurality of stations. In this case, sending of the first downlink control information and the second downlink control information may be performed by different network devices.

In addition, it should be further noted that, in this application, a quantity of time units occupied by the first PDCCH candidate may be the same as or different from a quantity of time units occupied by the second PDCCH candidate. When the quantity of time units occupied by the first PDCCH candidate is the same as the quantity of time units occupied by the second PDCCH candidate, and start time units of the first PDCCH candidate and the second PDCCH candidate are the same, using a rule that is for determining the start location of the PDSCH and that is provided in this application can ensure that the terminal device keeps consistent with the existing processing rule (where the start time unit of the PDSCH is determined based on the late-start PDCCH candidate). In this case, processing complexity is low when the terminal device performs data processing. When the quantity of time units occupied by the first PDCCH candidate is different from the quantity of time units occupied by the second PDCCH candidate, the terminal device may flexibly schedule HARQ-ACK information of the PDSCH.

In an optional manner, the network device sends a higher layer parameter referenceOfSLIVDCI-1-2, and correspondingly, the terminal device receives the higher layer parameter referenceOfSLIVDCI-1-2.

In an optional manner, the time unit is an OFDM symbol, and the PDSCH, the first downlink control information, and the second downlink control information are in a same slot.

In an optional manner, formats of the first downlink control information and the second downlink control information are DCI formats 1_2, and a cyclic redundancy check of the DCI format 1_2 is scrambled by one or more of the following radio network temporary identifiers: a C-RNTI, an MCS-C-RNTI, and a CS-RNTI.

In an optional manner, at least one time unit occupied by the first PDCCH candidate and at least one time unit occupied by the second PDCCH candidate overlap in time domain. According to the rule that is for determining the start location of the PDSCH and that is provided in this application, in different scenarios in which the first PDCCH candidate and the second PDCCH candidate overlap in time domain, the PDSCH processing time can be more accurately determined according to a same rule, to ensure that the network device and the terminal device have the consistent understanding.

In an optional manner, the network device may send second indication information to the terminal device. Correspondingly, the terminal device may receive the second indication information from the network device. The second indication information indicates the terminal device to send the HARQ-ACK information of the PDSCH. If the terminal device determines, based on the quantity of processing time units of the PDSCH, that a start time unit of a PUCCH is not earlier than a time unit determined based on the quantity of processing time units of the PDSCH, the terminal device sends the HARQ-ACK information of the PDSCH based on the second indication information. If the terminal device determines, based on the quantity of processing time units of the PDSCH, that a start time unit of the PUCCH is earlier than the time unit determined based on the quantity of processing time units of the PDSCH, the terminal device does not send the HARQ-ACK information of the PDSCH.

According to a third aspect, this application provides a communication apparatus, including an input/output unit and a processing unit.

The input/output unit is configured to: receive first downlink control information and second downlink control information that are from a network device, where the first downlink control information is carried by using a first physical downlink control channel PDCCH candidate, the second downlink control information is carried by using a second PDCCH candidate, the first downlink control information and the second downlink control information are same downlink control information, and a start time unit of the first PDCCH candidate is not later than a start time unit of the second PDCCH candidate, and receive first indication information from the network device, where the first indication information indicates a location of a start time unit and a quantity of occupied time units that are of a physical downlink shared channel PDSCH, and the start time unit of the PDSCH is not earlier than the start time unit of the first PDCCH candidate. The processing unit is configured to: determine that a quantity of time units occupied from the location of the start time unit of the PDSCH to an end time unit of the second PDCCH candidate is L', where L' is a positive integer, and determine a quantity of processing time units of the PDSCH based on L'.

In an optional manner, the input/output unit is further configured to receive a higher layer parameter referenceOfSLIVDCI-1-2.

In an optional manner, the time unit is an OFDM symbol, and the PDSCH, the first downlink control information, and the second downlink control information are in a same slot.

In an optional manner, formats of the first downlink control information and the second downlink control information are DCI formats 1_2, and a cyclic redundancy check of the DCI format 1_2 is scrambled by one or more of the following radio network temporary identifiers: a C-RNTI, an MCS-C-RNTI, and a CS-RNTI.

In an optional manner, an end time unit of the PDSCH is not later than the end time unit of the second PDCCH candidate, and the quantity of processing time units of the PDSCH is a sum of a first preset value and L'.

In an optional manner, the end time unit of the PDSCH is later than the end time unit of the second PDCCH candidate.

In an optional manner, under a first PDSCH processing capability of a terminal device, the processing unit is configured to determine the quantity of processing time units of the PDSCH based on L and L', where L is the quantity of time units occupied by the PDSCH.

In an optional manner, under a second PDSCH processing capability of the terminal device, the processing unit is configured to determine the quantity of processing time units of the PDSCH based on the sum of the first preset value and L'.

In an optional manner, the input/output unit is further configured to: receive second indication information from the network device, where the second indication information indicates the terminal device to send a physical uplink control channel PUCCH, and the PUCCH is used to carry HARQ-ACK information of the PDSCH; and if it is determined, based on the quantity of processing time units of the PDSCH, that a start time unit of the PUCCH is not earlier than a time unit determined based on the quantity of processing time units of the PDSCH, send the HARQ-ACK information of the PDSCH based on the second indication information; or if it is determined, based on the quantity of processing time units of the PDSCH, that a start time unit of the PUCCH is earlier than the time unit determined based on the quantity of processing time units of the PDSCH, skip sending the HARQ-ACK information of the PDSCH.

According to a fourth aspect, this application provides a communication apparatus, including an input/output unit and a processing unit.

The input/output unit is configured to receive first downlink control information and second downlink control information that are from a network device, where the first downlink control information is carried by using a first physical downlink control channel PDCCH candidate, the second downlink control information is carried by using a second PDCCH candidate, the first downlink control information and the second downlink control information are same downlink control information, an end time unit of the first PDCCH candidate is not earlier than an end time unit of the second PDCCH candidate, the first downlink control information and the second downlink control information include first indication information, the first indication information indicates a location of a start time unit and a quantity of occupied time units that are of a PDSCH, and the start time unit of the PDSCH is determined based on a PDCCH candidate whose start time is later in the first PDCCH candidate and the second PDCCH candidate, where a mapping type (mapping type) of the PDSCH is a mapping type B. The processing unit is configured to: determine, based on the location of the start time unit and the quantity of occupied time units that are of the PDSCH, a quantity of time units in which the PDSCH and the first PDCCH candidate overlap, and determine a quantity of processing time units of the PDSCH based on the quantity of overlapping time units.

In an optional manner, the input/output unit is further configured to receive a higher layer parameter referenceOfSLIVDCI-1-2.

In an optional manner, the time unit is an OFDM symbol, and the PDSCH, the first downlink control information, and the second downlink control information are in a same slot.

In an optional manner, formats of the first downlink control information and the second downlink control information are DCI formats 1_2, and a cyclic redundancy check of the DCI format 1_2 is scrambled by one or more of the following radio network temporary identifiers: a C-RNTI, an MCS-C-RNTI, and a CS-RNTI.

In an optional manner, a quantity of time units occupied by the first PDCCH candidate is different from a quantity of time units occupied by the second PDCCH candidate.

In an optional manner, at least one time unit occupied by the first PDCCH candidate and at least one time unit occupied by the second PDCCH candidate overlap in time domain.

In an optional manner, the input/output unit is further configured to: receive second indication information from the network device, where the second indication information indicates the terminal device to send a PUCCH, and the PUCCH is used to carry HARQ-ACK information of the PDSCH; and if it is determined, based on the quantity of processing time units of the PDSCH, that a start time unit of the PUCCH is not earlier than a time unit determined based on the quantity of processing time units of the PDSCH, send the HARQ-ACK information of the PDSCH based on the second indication information; or if it is determined, based on the quantity of processing time units of the PDSCH, that a start time unit of the PUCCH is earlier than the time unit determined based on the quantity of processing time units of the PDSCH, skip sending the HARQ-ACK information of the PDSCH.

For the third aspect or the fourth aspect, it should be understood that the input/output unit may be referred to as a transceiver unit, a communication unit, or the like. When the communication apparatus is a terminal device, the input/output unit may be a transceiver, and the processing unit may be a processor. When the communication apparatus is a module (for example, a chip) in the terminal device, the input/output unit may be an input/output interface, an input/output circuit, an input/output pin, or the like, and may also be referred to as an interface, a communication interface, an interface circuit, or the like. The processing unit may be a processor, a processing circuit, a logic circuit, or the like.

According to a fifth aspect, this application provides a communication apparatus, including an input/output unit and a processing unit.

The processing unit is configured to: determine that a quantity of time units occupied from a location of a start time unit of a PDSCH to an end time unit of a second physical downlink control channel PDCCH candidate is L', where L' is a positive integer, the start time unit of the PDSCH is not earlier than a start time unit of a first PDCCH candidate, first downlink control information is carried by using the first PDCCH candidate, second downlink control information is carried by using the second PDCCH candidate, the first downlink control information and the second downlink control information are same downlink control information, and the start time unit of the first PDCCH candidate is not later than a start time unit of the second PDCCH candidate, and determine a quantity of processing time units of the PDSCH based on L'. The input/output unit is configured to: send the first downlink control information and/or the second downlink control information to a terminal device, and send first indication information to the terminal device, where the first indication information indicates the location of the start time unit and a quantity of occupied time units that are of the PDSCH.

In an optional manner, the input/output unit is further configured to send a higher layer parameter referenceOfSLIVDCI-1-2.

In an optional manner, the time unit is an OFDM symbol, and the PDSCH, the first downlink control information, and the second downlink control information are in a same slot.

In an optional manner, formats of the first downlink control information and the second downlink control information are DCI formats 1_2, and a cyclic redundancy check of the DCI format 1_2 is scrambled by one or more of the following radio network temporary identifiers: a C-RNTI, an MCS-C-RNTI, and a CS-RNTI.

In an optional manner, an end time unit of the PDSCH is not later than the end time unit of the second PDCCH candidate, and the quantity of processing time units of the PDSCH is a sum of a first preset value and L'.

In an optional manner, the end time unit of the PDSCH is later than the end time unit of the second PDCCH candidate.

In an optional manner, under a first PDSCH processing capability of the terminal device, the processing unit is configured to determine the quantity of processing time units of the PDSCH based on L and L', where L is the quantity of time units occupied by the PDSCH.

In an optional manner, under a second PDSCH processing capability of the terminal device, the processing unit is configured to determine the quantity of processing time units of the PDSCH based on the sum of the first preset value and L'.

In an optional manner, the input/output unit is further configured to send second indication information to the terminal device, where the second indication information indicates the terminal device to send a physical uplink control channel PUCCH, a start time unit of the PUCCH is determined based on the quantity of processing time units of the PDSCH, and the PUCCH is used to carry HARQ-ACK information of the PDSCH.

According to a sixth aspect, this application provides a communication apparatus, including an input/output unit and a processing unit.

The processing unit is configured to determine a quantity of processing time units of a PDSCH based on a quantity of time units in which the PDSCH and a first physical downlink control channel PDCCH candidate overlap, where a start time unit of the PDSCH is determined based on a PDCCH candidate whose start time is later in the first PDCCH candidate and a second PDCCH candidate, where the first PDCCH candidate carries first downlink control information, the second PDCCH candidate carries second downlink control information, the first downlink control information and the second downlink control information are same downlink control information, an end time unit of the first PDCCH candidate is not earlier than an end time unit of the second PDCCH candidate, the first downlink control information and the second downlink control information include first indication information, and the first indication information indicates a location of the start time unit and a quantity of occupied time units that are of the PDSCH, where a mapping type (mapping type) of the PDSCH is a mapping type B. The input/output unit is configured to send the first downlink control information and/or the second downlink control information to a terminal device.

In an optional manner, the input/output unit is further configured to send a higher layer parameter referenceOfSLIVDCI-1-2.

In an optional manner, the time unit is an OFDM symbol, and the PDSCH, the first downlink control information, and the second downlink control information are in a same slot.

In an optional manner, formats of the first downlink control information and the second downlink control information are DCI formats 1_2, and a cyclic redundancy check of the DCI format 1_2 is scrambled by one or more of the following radio network temporary identifiers: a C-RNTI, an MCS-C-RNTI, and a CS-RNTI.

In an optional manner, a quantity of time units occupied by the first PDCCH candidate is different from a quantity of time units occupied by the second PDCCH candidate.

In an optional manner, at least one time unit occupied by the first PDCCH candidate and at least one time unit occupied by the second PDCCH candidate overlap in time domain.

In an optional manner, the input/output unit is further configured to send second indication information to the terminal device, where the second indication information indicates the terminal device to send a physical uplink control channel PUCCH, a start time unit of the PUCCH is determined based on the quantity of processing time units of the PDSCH, and the PUCCH is used to carry HARQ-ACK information of the PDSCH.

For the fifth aspect or the sixth aspect, it should be understood that the input/output unit may be referred to as a transceiver unit, a communication unit, or the like. When the communication apparatus is a network device, the input/output unit may be a transceiver, and the processing unit may be a processor. When the communication apparatus is a module (for example, a chip) in the network device, the input/output unit may be an input/output interface, an input/output circuit, an input/output pin, or the like, and may also be referred to as an interface, a communication interface, an interface circuit, or the like. The processing unit may be a processor, a processing circuit, a logic circuit, or the like.

According to a seventh aspect, this application provides a communication apparatus, including at least one processor and a memory. The memory is configured to store a computer program or instructions. When the apparatus runs, the at least one processor executes the computer program or the instructions, to enable the communication apparatus to perform the method according to the first aspect or the embodiments of the first aspect or the method according to the second aspect or the embodiments of the second aspect.

According to an eighth aspect, an embodiment of this application provides another communication apparatus, including an interface circuit and a logic circuit. The interface circuit may be understood as an input/output interface, and the logic circuit may be configured to run code instructions to perform the method according to the first aspect or the embodiments of the first aspect or the method according to the second aspect or the embodiments of the second aspect.

According to a ninth aspect, this application further provides a computer-readable storage medium. The computer-readable storage medium stores computer-readable instructions. When the computer-readable instructions are run on a computer, the computer is enabled to perform the method according to any one of the first aspect or the possible designs of the first aspect or the method according to any one of the second aspect or the possible designs of the second aspect.

According to a tenth aspect, this application provides a computer program product including instructions. When the computer program product runs on a computer, the computer is enabled to perform the method according to the first aspect or the embodiments of the first aspect or the method according to the second aspect or the embodiments of the second aspect.

According to an eleventh aspect, this application provides a chip system. The chip system includes a processor, and may further include a memory, configured to implement the method according to any one of the first aspect or the possible designs of the first aspect or the method according to any one of the second aspect or the possible designs of the second aspect. The chip system may include a chip, or may include a chip and another discrete device.

According to a twelfth aspect, this application provides a communication system. The system includes a first communication apparatus and a second communication apparatus. The communication system is configured to perform the method according to any one of the first aspect or the possible designs of the first aspect or the method according to any one of the second aspect or the possible designs of the second aspect.

For technical effects that can be achieved in the second aspect to the twelfth aspect, refer to descriptions of technical effects that can be achieved in a corresponding possible design solution in the first aspect. Details are not described herein again in this application.

### BRIEF DESCRIPTION OF DRAWINGS

FIG. 1 is a schematic diagram of a communication system according to an embodiment of this application;
FIG. 2 is a schematic flowchart of a method for determining PDSCH processing time according to an embodiment of this application;
FIG. 3 is a schematic diagram of a time unit occupied by a PDCCH according to an embodiment of this application;
FIG. 4 is a schematic diagram of a time unit occupied by a PDCCH according to an embodiment of this application;
FIG. 5 is a schematic diagram of a time unit occupied by a PDCCH according to an embodiment of this application;
FIG. 6 is a schematic diagram of a time unit occupied by a PDCCH according to an embodiment of this application;
FIG. 7 is a schematic diagram of a time unit occupied by a PDCCH according to an embodiment of this application;
FIG. 8 is a schematic diagram of a time unit occupied by a PDCCH according to an embodiment of this application;
FIG. 9 is a schematic flowchart of a method for determining PDSCH processing time according to an embodiment of this application;
FIG. 10 is a schematic diagram of a time unit occupied by a PDCCH according to an embodiment of this application;
FIG. 11 is a schematic diagram of a time unit occupied by a PDCCH according to an embodiment of this application;
FIG. 12 is a schematic diagram of a time unit occupied by a PDCCH according to an embodiment of this application;
FIG. 13 is a schematic diagram of a structure of a communication apparatus according to an embodiment of this application;
FIG. 14 is a schematic diagram of a structure of a communication apparatus according to an embodiment of this application; and
FIG. 15 is a schematic diagram of a structure of a communication apparatus according to an embodiment of this application.

### DESCRIPTION OF EMBODIMENTS

To make objectives, technical solutions, and advantages of this application clearer, the following further describes this application in detail with reference to accompanying drawings. A specific operation method in a method embodiment may also be applied to an apparatus embodiment or a system embodiment. In the descriptions of this application, unless otherwise specified, "a plurality of" means two or more. Therefore, for implementations of an apparatus and a method, reference may be made to each other, and no repeated description is provided.

The communication method provided in embodiments of this application may be applied to a 5G communication system or various future communication systems. Specifically, for example, three most typical communication scenarios of the 5G communication system are enhanced mobile broadband (enhanced mobile broadband, eMBB), massive machine type communication (massive machine type communication, mMTC), and ultra reliable low latency communication (ultra reliable low latency communication, URLLC).

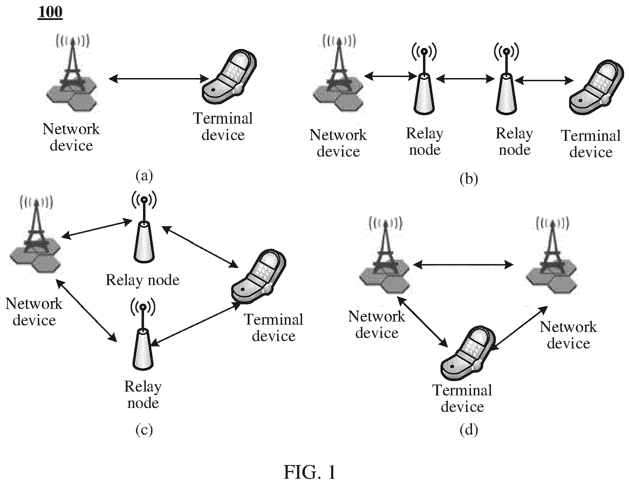

The following describes a communication system applicable to the communication method in this application. In the communication system, a first communication apparatus may be a terminal device, and a second communication apparatus may be a network device. In an actual application, this is not specifically limited in this application. The following describes, with reference to FIG. 1, the communication system that may be applicable to this application by using an example in which the first communication apparatus is the terminal device and the second communication apparatus is the network device.

FIG. 1 shows a communication system 100 applicable to this application. In (a) in FIG. 1, the communication system 100 includes a network device and a terminal device. That the network device sends data to the terminal device may be understood as downlink data transmission, and that the terminal device sends data to the network device may be understood as uplink data transmission. In (b) in FIG. 1, the communication system 100 is a multi-hop single-connectivity system, and includes a network device, a terminal device, and a relay node. Data may be transmitted between the network device and the terminal device through a plurality of relay nodes. In (c) in FIG. 1, the communication system 100 is a multi-hop multi-connectivity system, and includes a network device, a terminal device, and a relay node. Data may be transmitted between the network device and the terminal device through a plurality of relay nodes. The relay nodes in (b) and (c) in FIG. 1 may be single-hop (single-hop) or multi-hop (multi-hop). The relay node may be a small cell, an integrated access and backhaul (integrated access and backhaul, IAB) node, a distributed unit (distributed unit, DU), a terminal device, a TRP, or the like. Details are not described herein again in this application. In (d) in FIG. 1, a dual-connectivity (dual-connectivity, DC) communication system is shown. DC is an important technology introduced in 3GPP Release-12. With the dual-connectivity technology, a long term evolution (long term evolution, LTE) macro cell and small cell may implement carrier aggregation through an existing non-ideal backhaul (non-ideal backhaul) X2 interface, thereby providing a higher rate for a user. In addition, macro/micro networking is used to improve spectral efficiency and load balancing. A terminal device that supports dual connectivity may be connected to two LTE base stations at the same time, increasing a throughput of a single user. During 5G network deployment, a 5G cell may be used as a wide area standalone or as a small cell for coverage and capacity enhancement of an existing LTE network. No matter which networking mode is used, the dual connectivity technology can be used to implement interconnection between LTE and 5G systems, thereby improving radio resource utilization of an entire mobile network system, reducing a handover delay of the communication system, and improving user and system performance.

The foregoing network device is an apparatus that is deployed in a radio access network and that provides a wireless communication function for the terminal device. An access network device is a device that has a wireless transceiver function or a chip that may be disposed in the device. The device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), or an access point (access point, AP), a wireless relay node, a wireless backhaul node, a transmission point (transmission reception point, TRP or transmission point, TP), or the like in a wireless fidelity (wireless fidelity, Wi-Fi) system, or may be a gNB or a transmission point (a TRP or a TP) in a 5G (for example, NR) system, or one antenna panel or one group of (including a plurality of antenna panels) antenna panels of a base station in the 5G system, or may be a network node that constitutes a gNB or a transmission point, for example, a baseband unit (BBU), a distributed unit (distributed unit, DU), or a satellite.

In some deployments, the gNB may include a central unit (central unit, CU) and a DU. The gNB may further include a radio unit (radio unit, RU). The CU implements some functions of the gNB, and the DU implements some functions of the gNB. For example, the CU implements functions of a radio resource control (radio resource control, RRC) layer and a packet data convergence protocol (packet data convergence protocol, PDCP) layer. The DU implements functions of a radio link control (radio link control, RLC) layer, a media access control (media access control, MAC) layer, and a physical (physical, PHY) layer. Information at the RRC layer eventually becomes information at the PHY layer (that is, sent through the PHY layer), or is converted from information at the PHY layer. Therefore, in this architecture, higher layer signaling such as RRC layer signaling or PDCP layer signaling may also be considered as being sent by the DU or sent by the DU and the RU. It may be understood that the access network device may be a CU node, a DU node, or a device including a CU node and a DU node. In addition, the CU may be classified as a second communication apparatus in the access network RAN, or the CU may be classified as a second communication apparatus in a core network CN. This is not limited herein.

The terminal device in embodiments of this application may also be referred to as a terminal, is an entity that is on a user side and that is configured to receive or transmit a signal, and is configured to: send an uplink signal to the network device, or receive a downlink signal from the network device. The terminal device includes a device that provides a user with voice and/or data connectivity, for example, may include a handheld device with a wireless connection function or a processing device connected to a wireless modem. The terminal device may communicate with the core network through the radio access network (radio access network, RAN), and exchange a voice and/or data with the RAN. The terminal device may include user equipment (user equipment, UE), a V2X terminal device, a wireless terminal device, a mobile terminal device, a device-to-device (device-to-device, D2D) communication terminal device, a machine-to-machine/machine-type communications (machine-to-machine/machine-type communications, M2M/MTC) terminal device, an Internet of Things (Internet of Things, IoT) terminal device, a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), a wearable device, a vehicle-mounted device, or the like.

As an example instead of a limitation, in embodiments of this application, the terminal device may alternatively be the wearable device. The wearable device may also be referred to as a wearable intelligent device, an intelligent wearable device, or the like, and is a general term of wearable devices that are intelligently designed and developed for daily wear by using a wearable technology, for example, glasses, gloves, watches, clothes, and shoes. The wearable device is a portable device that is directly worn on a body or integrated into clothes or an accessory of the user. The wearable device is not merely a hardware device, but is used to implement a powerful function through software support, data exchange, and cloud interaction. In a broad sense, the wearable intelligent device includes a full-featured and large-sized device that can implement all or some functions without depending on a smartphone, for example, a smart watch or smart glasses, and includes a device that is dedicated to only one type of application function and needs to collaboratively work with another device such as the smartphone, for example, various smart bands, smart helmets, or smart jewelry for monitoring physical signs.

If the various terminal devices described above are located in a vehicle (for example, placed in the vehicle or installed in the vehicle), the terminal devices may be all considered as vehicle-mounted terminal devices. For example, the vehicle-mounted terminal device is also referred to as an on-board unit (on-board unit, OBU).

In the descriptions of embodiments of this application, the term "and/or" describes an association relationship between associated objects and indicates that three relationships may exist. For example, A and/or B may indicate the following three cases: Only A exists, both A and B exist, and only B exists. The character "/" usually indicates an "or" relationship between the associated objects. In this application, "at least one" means one or more, and "a plurality of" means two or more. In addition, it should be understood that in the descriptions of this application, terms such as "first" and "second" are merely for distinguishing and description, but should not be understood as indicating or implying relative importance, or should not be understood as indicating or implying a sequence.

The network device sends DCI to the terminal device through a PDCCH, and the network device may schedule a PDCSH by using the DCI. Usually, for the PDSCH scheduled by using the DCI, a slot boundary may be used as a reference point, and reference may be further made to a start time unit of the PDCCH. However, according to a communication protocol specification, the following conditions usually need to be met when the start time unit of the PDCCH is used as a reference point:
(1) A mapping type of the scheduled PDSCH is a mapping type B, where a start time unit of the PDSCH cannot be earlier than the start time unit of the scheduling PDCCH. The start time unit of the scheduling PDCCH may alternatively be understood as a start OFDM symbol of a PDCCH monitoring occasion PDCCH MO (PDCCH monitoring occasion) at which a DCI format 1_2 is detected.
(2) A higher layer parameter referenceOfSLIVDCI-1-2 is configured. For the PDSCH scheduled by using the DCI format 1_2, the parameter enables the start OFDM symbol of the PDCCH MO that schedules the PDSCH as a reference point for determining PDSCH time domain OFDM. It may be understood as that when the higher layer parameter enables use of the reference point, whether the reference point is actually used needs to be determined based on another condition, instead of determining to use the reference point based only on the higher layer parameter configuration.
(3) K0=0 (indicating that scheduling is performed in a same slot), where the scheduled PDSCH and the scheduling PDCCH are in the same slot. A DCI format of the downlink control information in the scheduling PDCCH is 1_2, and a cyclic redundancy check of the DCI format 1_2 is scrambled by the following three radio network temporary identifiers (radio network temporary identifiers, RNTIs): a cell radio network temporary identifier (cell radio network temporary identifier, C-RNTI), a modulation coding scheme cell radio network temporary identifier (modulation coding scheme cell radio network temporary identifier, MCS-C-RNTI), and a configured scheduling radio network temporary identifier (configured scheduling radio network temporary identifier, CS-RNTI).

It should be understood that the condition (2) is an enabling parameter. If the terminal device meets the conditions (1) and (2), but does not receive referenceOfSLIVDCI-1-2 configured by the network device, the terminal device still determines a time domain location of the PDSCH by using the slot boundary as the reference point.

PDCCH repeated transmission of the PDCCH is not included in the foregoing case. However, in a discussion of NR Rel-17, a scenario of the PDCCH repeated transmission is defined, that is, a coding/rate matching operation is based on repeated transmission of one PDCCH, a same coded bit is repeatedly transmitted on another PDCCH, a same aggregation level (aggregation level, AL) or a same quantity of control channel elements (control channel elements, CCEs) is used for each time of PDCCH repeated transmission, and the same coded bit and same DCI load information (where DCI bit content is the same) are repeatedly transmitted on the PDCCH.

In a case of the PDCCH repeated transmission, how to determine the start time unit of the PDSCH, and how to determine PDSCH processing time after the start time unit of the PDSCH is determined have not yet been determined. In this application, the following describes, by using the following two different cases, an execution procedure in which the start time unit of the PDSCH is determined based on different PDCCHs and the PDSCH processing time is determined based on different references. However, in an actual application, the following two cases are not specifically limited in this application. In the following cases, only the start OFDM symbol of the PDCCH is used as the reference point for description.

Case 1: The start time unit of the PDSCH is determined based on a PDCCH whose start time is earlier.

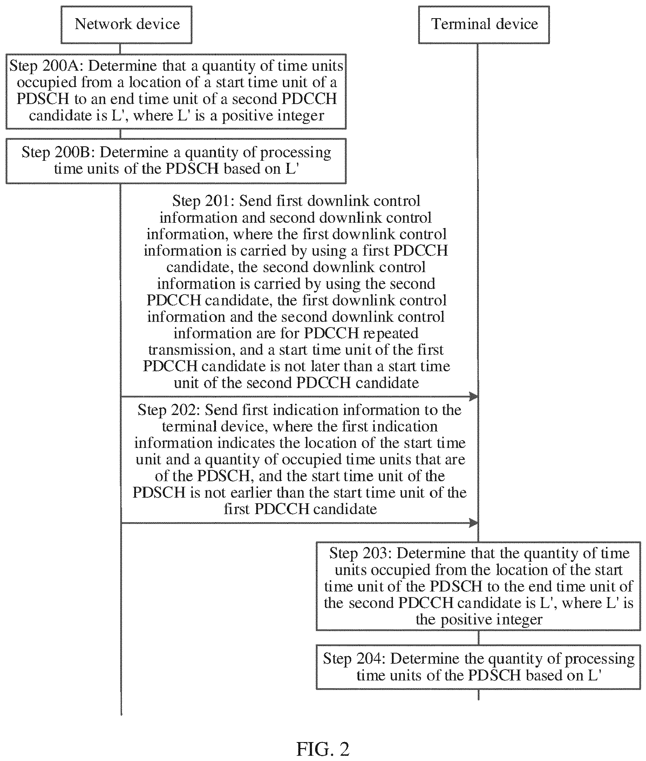

For better description of the case 1, refer to FIG. 2. The method may be implemented through interaction between a second communication apparatus and a first communication apparatus, or may be separately implemented by the second communication apparatus or the first communication apparatus. The second communication apparatus may be understood as a network device or a module (for example, a chip) in the network device, and the first communication apparatus may be understood as a terminal device or a module (for example, a chip) in the terminal device. This is not specifically limited in this application. In FIG. 2, only an example in which the first communication apparatus is the terminal device and the second communication apparatus is the network device is used for illustration. The following may be performed:

Step 201: The network device sends first downlink control information and second downlink control information to the terminal device, where the first downlink control information is carried by using a first PDCCH candidate, the second downlink control information is carried by using a second PDCCH candidate, the first downlink control information and the second downlink control information are for PDCCH repeated transmission, and a start time unit of the first PDCCH candidate is not later than a start time unit of the second PDCCH candidate. Correspondingly, the terminal device receives the first downlink control information and the second downlink control information that are from the network device.

It should be noted that, in a single-station scenario, a single-station network device sends the first downlink control information and the second downlink control information to the terminal device. In a multi-station scenario, one network device may send the first downlink control information to the terminal device, and another network device may send the second downlink control information to the terminal device.

It should be noted that, that the first downlink control information and the second downlink control information are for the PDCCH repeated transmission may be understood as that the first downlink control information and the second downlink control information are for transmitting same downlink control information, may be understood as that information formats of the first downlink control information and the second downlink control information are the same, or may be understood as that the first downlink control information and the second downlink control information indicate same scheduling. For example, both are for scheduling a same PDSCH. The same PDSCH may be understood as PDSCHs with same load, PDSCHs at a same time-frequency location, or one same PDSCH. The PDCCH repeated transmission may alternatively be understood as PDCCH repeated transmission in a communication protocol. This is not limited in this application. The time unit in this application may be understood as a slot, a subframe, an OFDM symbol, or the like. This is not specifically limited in this application, and a format of the time unit may be flexibly selected with reference to an actual application. The following uses only an example in which the time unit is the OFDM symbol for description.

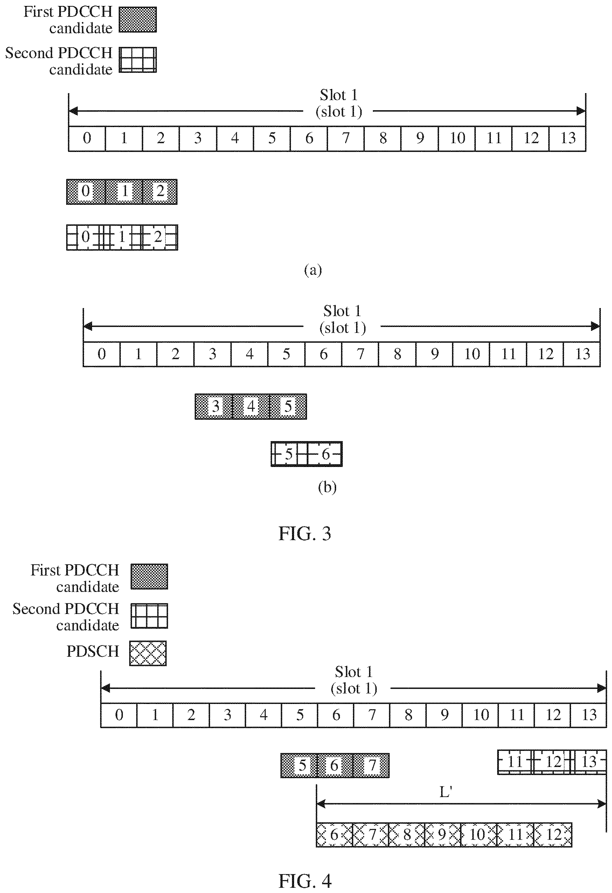

In addition, refer to FIG. 3. That the start time unit of the first PDCCH candidate is not later than the start time unit of the second PDCCH candidate may be understood that a start OFDM symbol of the first PDCCH candidate is the same as a start OFDM symbol of the second PDCCH candidate. As shown in (a) in FIG. 3, a start OFDM symbol of the first PDCCH candidate and a start OFDM symbol of the second PDCCH candidate are OFDM symbols 0 in a slot 1 (slot 1). Alternatively, the start OFDM symbol of the first PDCCH candidate is before the start OFDM symbol of the second PDCCH candidate. As shown in (b) in FIG. 3, a start OFDM symbol of the first PDCCH candidate is a symbol 3, a start OFDM symbol of the second PDCCH candidate is 5, and the symbol 3 is before the symbol 5. In addition, if the start OFDM symbol of the first PDCCH candidate is the same as the start OFDM symbol of the second PDCCH candidate, it may be understood as that the first PDCCH candidate and the second PDCCH candidate overlap (where if quantities of time units occupied by the first PDCCH candidate and the second PDCCH candidate are also the same, it may be understood as that the first PDCCH candidate and the second PDCCH candidate completely overlap, or if quantities of time units occupied by the first PDCCH candidate and the second PDCCH candidate are different, it may be understood as that the first PDCCH candidate and the second PDCCH candidate partially overlap). Either of the PDCCH candidates can be used as a reference for the PDSCH to determine a start time unit of the PDSCH.

Step 202: The network device sends first indication information to the terminal device, where the first indication information indicates a location of the start time unit and a quantity of occupied time units that are of the scheduled PDSCH, and the start time unit of the scheduled PDSCH is not earlier than the start time unit of the first PDCCH candidate. Correspondingly, the terminal device receives the first indication information from the network device.

It should be noted that the first indication information may alternatively be carried in the first downlink control information and the second downlink control information, for example, a DCI format 1_2, or may be carried in other control information, for example, RRC information. This is not specifically limited in this application.

In addition, because as mentioned in step 201, the start time unit of the first PDCCH candidate is not later than the start time unit of the second PDCCH candidate, that the start time unit of the PDSCH is not earlier than the start time unit of the first PDCCH candidate may be understood as that the start time unit of the PDSCH is after the start time unit of the first PDCCH candidate, that is, after the start time unit of the first PDCCH candidate. For example, a start OFDM symbol of the first PDCCH candidate is the OFDM symbol 5 in the slot 1, and a start OFDM symbol of the PDSCH is an OFDM symbol 6 in the slot 1 or an OFDM symbol 7 in the slot 1. This is merely an example for description and is not specifically limited herein.

Step 203: The terminal device determines that a quantity of time units occupied from the location of the start time unit of the PDSCH to an end time unit of the second PDCCH candidate is L', where L' is a positive integer.

Step 204: The terminal device determines a quantity of processing time units of the PDSCH based on L'.

It should be further noted that the network device also needs to determine the quantity of processing time units of the PDSCH. However, different from an occasion at which the terminal device determines the quantity of processing time units of the PDSCH, the network device needs to determine the quantity of processing time units of the PDSCH before step 201 is performed. The following may be performed:

Step 200A: The network device determines that the quantity of time units occupied from the location of the start time unit of the PDSCH to the end time unit of the second PDCCH candidate is L', where L' is the positive integer.

Step 200B: The network device determines the quantity of processing time units of the PDSCH based on L'.

It should be noted that in the single-station scenario, the single-station network device may perform the steps of step 200A and step 200B by itself. In the multi-station scenario (where it is assumed that a plurality of stations communicate with each other), a plurality of network devices may respectively perform the steps of step 200A and step 200B, or the steps may be performed by using only one network device, and another network device may not perform the steps after determining that a network device that performs step 200A and step 200B already exists, thereby reducing device overheads.

It should be noted that the network device may indicate, based on the determined quantity of processing time units of the PDSCH, the terminal device to feed back HARQ-ACK information in a specified time unit, and the terminal device may determine, based on the determined quantity of processing time units of the PDSCH, whether to feed back the HARQ-ACK information based on the indication information of the network device.

As shown in FIG. 4, if a start OFDM symbol of the first PDCCH candidate is 5, an end OFDM symbol of the first PDCCH candidate is 7, a start OFDM symbol of the second PDCCH candidate is 11, an end OFDM symbol of the second PDCCH candidate is 13, a start OFDM symbol of the PDSCH is 6, and an end OFDM symbol of the PDSCH is 12, L' is a quantity of OFDM symbols occupied by the OFDM symbol 6 to the OFDM symbol 13, and is eight OFDM symbols.

It should be further noted that the quantity of processing time units of the PDSCH may be understood as a quantity of time units occupied by the terminal device to start channel estimation, data processing, and the like after the first downlink control information and the second downlink control information are demodulated. After the processing time unit of the PDSCH ends, the HARQ-ACK information is fed back. In addition, a start time unit of the processing time unit of the PDSCH is one or more time units after an end time unit of the PDSCH. For example, an end time unit of the PDSCH is the OFDM symbol 3, and a start time unit of the processing time unit of the PDSCH may be the OFDM symbol 3, or may be the OFDM symbol 5. This is merely an example for description and is not specifically limited herein.

In this application, the start time unit of the PDSCH is determined based on an early-start PDCCH candidate. When the quantity of processing time units of the PDSCH is determined, the quantity of processing time units of the PDSCH is determined by defining the quantity of time units occupied from the location of the start time unit of the PDSCH to the end time unit of the second PDCCH candidate, so that delay impact caused by a late-start PDCCH candidate on PDSCH processing time is resolved. In this way, the first communication apparatus and the second communication apparatus have a consistent understanding of the quantity of processing time units of the PDSCH, to ensure that a time point at which the second communication apparatus schedules an uplink feedback is not earlier than a time point at which the first communication apparatus processes the PDSCH, thereby ensuring robustness of the PDCCH repeated transmission.

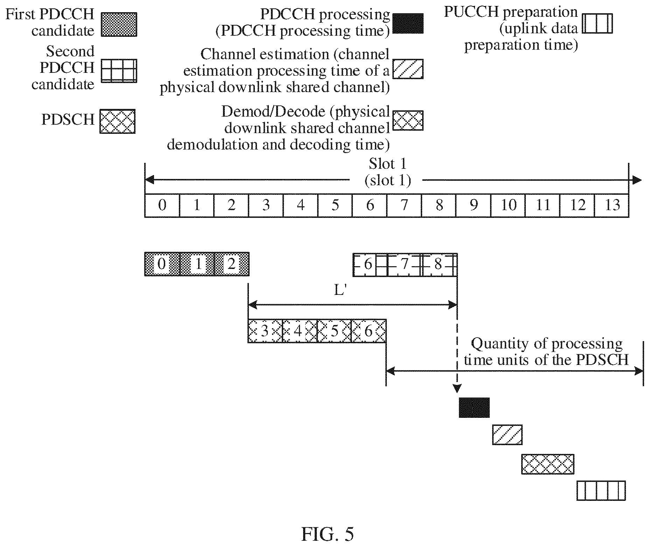

In an optional manner, the end time unit of the PDSCH is not later than the end time unit of the second PDCCH candidate. As shown in FIG. 5, if a start OFDM symbol of the first PDCCH candidate is 0, an end OFDM symbol of the first PDCCH candidate is 2, a start OFDM symbol of the second PDCCH candidate is 6, an end OFDM symbol of the second PDCCH candidate is 8, a start OFDM symbol of the PDSCH is 3, and an end OFDM symbol of the PDSCH is 6, L' is a quantity of OFDM symbols occupied by the OFDM symbol 3 to the OFDM symbol 8, and is six OFDM symbols. The quantity of processing time units of the PDSCH is a sum of a first preset value and L'.

It should be noted that the first preset value is determined based on a communication protocol specification. A unit of the first preset value is also a time unit, is usually *N*₁ in the communication protocol, and may be determined based on the communication protocol specification in the actual application. This is not specifically limited in this application. Usually, the processing time unit of the PDSCH is defined as *T_{proc,1}* in the communication protocol, where T_{*proc*,1} is a parameter including *N*₁ and *d*_{1,1}, and T_{*proc*,1}=(*N*₁+*d*_{1,1})(2048+144)**k*2^{-*µ*}*T_{C}. *k*2*, µ,* and T_{C} may be considered as constants, *d*_{1,1} indicates a quantity of time units in which the PDSCH and the PDCCH overlap, and * indicates a multiplication operation. A value of *N*₁ is related to a PDSCH processing capability of the terminal device. Table 1 shows a value of *N*₁ when the PDSCH processing capability of the terminal device is 1 and *µ* is set to different values. For example, when *µ* is 0 and dmrs-AdditionalPosition=pos0 is configured in both of higher layer parameters: dmrs-DownlinkForPDSCH-Mapping TypeA and dmrs-DownlinkForPDSCH-Mapping TypeB, N₁ is 8. When *µ* is 1 and dmrs-AdditionalPosition≠pos0 is configured in either of dmrs-DownlinkForPDSCH-Mapping TypeA and dmrs-DownlinkForPDSCH-Mapping TypeB or the higher layer parameter is not configured, *N*₁ is 13.

**Table 1**

| *µ* | *N*₁ | |
|---|---|---|
| | dmrs-AdditionalPosition=pos0 in DMRS-DownlinkCofig in both of dmrs-DownlinkForPDSCH-Mapping TypeA and dmrs-DownlinkForPDSCH-Mapping TypeB | dmrs-AdditionalPosition≠'pos0' in DMRS-DownlinkConfig in either of dmrs-DownlinkForPDSCH-MappingTypeA and dmrs-DownlinkForPDSCH-MappingTypeB or if the higher layer parameter is not configured |
| 0 | 8 | *N*_{1,0} |
| 1 | 10 | 13 |
| 2 | 17 | 20 |
| 3 | 20 | 24 |

Table 2 shows a value of *N*₁ when the PDSCH processing capability of the terminal device is 2 and *u* is set to different values. For example, when *µ* is 0 and dmrs-AdditionalPosition=pos0 is configured in both of higher layer parameters: dmrs-DownlinkForPDSCH-Mapping TypeA and dmrs-DownlinkForPDSCH-Mapping TypeB, *N*₁ is 3.

**Table 2**

| *µ* | dmrs-AdditionalPosition=pos0 in DMRS-DownlinkCofig in both of dmrs-DownlinkForPDSCH-Mapping TypeA and dmrs-DownlinkForPDSCH-Mapping TypeB |
|---|---|
| 0 | 3 |
| 1 | 4.5 |
| 2 | 9 for frequency range 1 |

It should be noted that, if the terminal indicates, to a base station by reporting a parameter pdsch-ProcessingType2, whether the PDSCH processing capability 2 is supported, it may be understood as that if the terminal does not report the parameter, the base station determines that the terminal supports only the PDSCH processing capability 1, that is, supports only the value (that is, Table 1) in Table 5.3-1 in the protocol 38.214. It may alternatively be understood as that the terminal reports the parameter, and the base station determines that the terminal supports only the PDSCH processing capability 2, that is, supports only the value (that is, Table 2) in Table 5.3-2 in the protocol 38.214. If the terminal supports the PDSCH processing capability 2, data in a table to be specifically used to determine *N*₁ depends on whether the base station specifically configures the PDSCH processing capability 2 to be enabled in one serving cell. If the PDSCH processing capability 2 is enabled by the base station, the value in Table 5.3-2 is used to determine *N*₁. If the PDSCH processing capability 2 is disabled, the value in Table 5.3-1 is used to determine *N*₁*.*

In a scenario in FIG. 5, if the PDSCH processing capability of the terminal device is 2, and *µ* is 0, *N*₁ is 3, and T_{*proc*,1} may be considered as 3+6 (where a distance between the start OFDM symbol of the PDSCH and the end OFDM symbol of the second PDCCH candidate is six OFDM symbols) OFDM symbols. It should be further noted that, in FIG. 5, the end OFDM symbol of the PDSCH is before the end OFDM symbol of the second PDCCH candidate, and the terminal device needs to receive the downlink control information in both the first PDCCH candidate and the second PDCCH candidate before performing PDSCH processing, that is, PDCCH processing time (PDCCH processing), channel estimation (channel estimation processing time of the physical downlink shared channel), demod/decode (physical downlink shared channel demodulation and decoding time), PUCCH preparation (uplink data preparation time), and the like that are shown in FIG. 5.

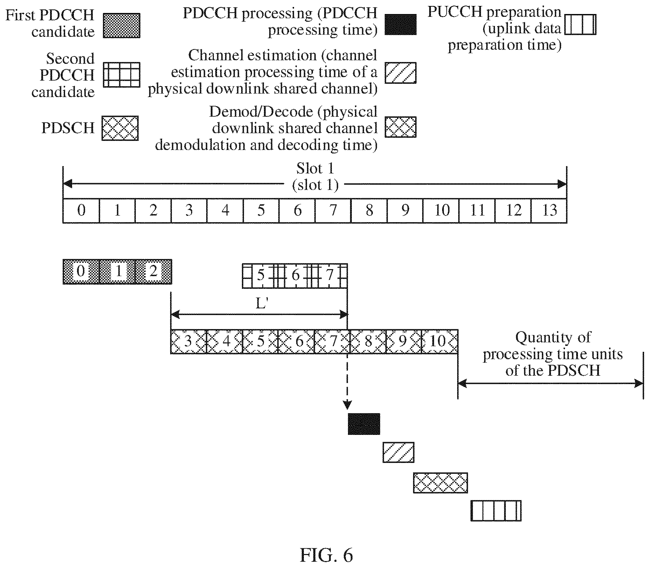

In an optional manner, the end time unit of the PDSCH is later than the end time unit of the second PDCCH candidate. As shown in FIG. 6, if a start OFDM symbol of the first PDCCH candidate is 0, an end OFDM symbol of the first PDCCH candidate is 2, a start OFDM symbol of the second PDCCH candidate is 5, an end OFDM symbol of the second PDCCH candidate is 7, a start OFDM symbol of the PDSCH is 3, and an end OFDM symbol of the PDSCH is 10, L' is a quantity of OFDM symbols occupied by the OFDM symbol 3 to the OFDM symbol 10, and is eight OFDM symbols. Under the first PDSCH processing capability of the first communication apparatus, the first communication apparatus or the second communication apparatus may determine the quantity of processing time units of the PDSCH based on L and L', where L is the quantity of time units occupied by the PDSCH. Refer to FIG. 6. A value of L is 8.

However, in the actual application, for different values of L, rules for calculating the quantity of processing time units of the PDSCH are different. If L≥7, the quantity of processing time units of the PDSCH is the sum of the first preset value and L'. If 4≤L≤6, the quantity of processing time units of the PDSCH is a sum of the first preset value and a second value, where the second value is max(7-L, L'). If L=3, the quantity of processing time units of the PDSCH is a sum of the first preset value and a third value, where the third value is max(3+min(d, 1), L'). If L=2, the quantity of processing time units of the PDSCH is a sum of the first preset value and a fourth value, where the fourth value is max(3+d, L'), and d indicates a quantity of time units in which the PDSCH and the first PDCCH candidate and/or the second PDCCH candidate overlap. Refer to FIG. 6. It can be learned that OFDM symbols in which the PDSCH and the second PDCCH candidate overlap are 5, 6, and 7, and therefore, d is three OFDM symbols.

When the quantity of time units occupied by the PDSCH is two OFDM symbols, three OFDM symbols, and four OFDM symbols, a value of *d*_{1,1} may be determined with reference to Table 3. Units in Table 3 are OFDM symbols. For example, if L=4, L'=2, and d=2, the quantity of processing time units of the PDSCH is a sum of *N*₁ and *d*_{1,1} (*d*_{1,1}=3).

**Table 3**

| | L'=0 and d=0 | L'=1 and d=1 | L'=2 and d=2 | L'=3 and d=3 |
|---|---|---|---|---|
| L=4 | *d*_{1,1}=max(7-L, L')=3 | *d*_{1,1}=max(7-L, L')=3 | *d*_{1,1}=max(7-L, L')=3 | *d*_{1,1}=max(7-L, L')=3 |
| L=3 | *d*_{1,1}=max(3+min(d, 1), L')=3 | *d*_{1,1}=max(7-L, L')=4 | *d*_{1,1}=max(7-L, L')=4 | *d*_{1,1}=max(7-L, L')=4 |
| L=2 | *d*_{1,1}=max(3+d, L')=3 | *d*_{1,1}=max(7-L, L')=4 | *d*_{1,1}=max(7-L, L')=5 | *d*_{1,1}=max(7-L, L')=6 |

In an optional manner, the end time unit of the PDSCH is later than the end time unit of the second PDCCH candidate. Under the second PDSCH processing capability of the first communication apparatus, the first communication apparatus or the second communication apparatus may determine the quantity of processing time units of the PDSCH based on the sum of the first preset value and L'.

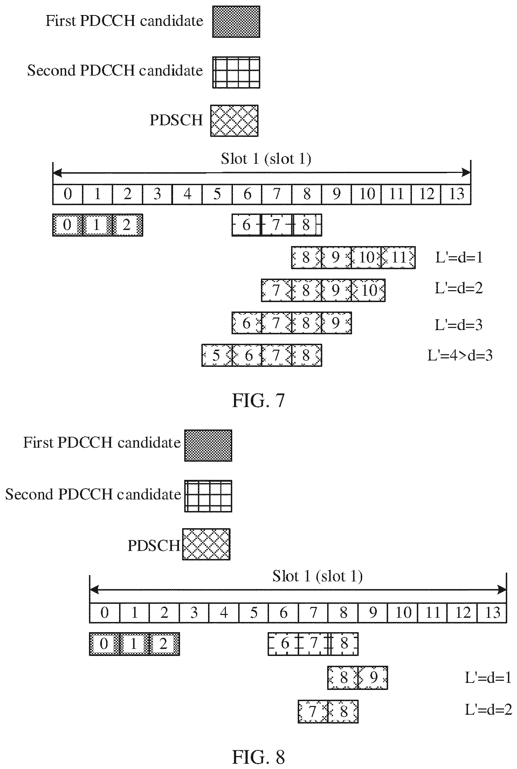

FIG. 7 shows that when the PDSCH processing capability of the terminal device is 2, when L is four OFDM symbols, the PDSCH and the second PDCCH candidate overlap in different OFDM symbols, that is, when d is different, values of L' are different. For example, when d is 1, L' is 1. When d is 2, L' is 2. When d is 3, L' is 3. When d is 3, L' is 4.

FIG. 8 shows that when the PDSCH processing capability of the terminal device is 2, when L is two OFDM symbols, the PDSCH and the second PDCCH candidate overlap in different OFDM symbols, that is, when d is different, values of L' are different. For example, when d is 1, L' is 1. When d is 2, L' is 2.

In this manner, the first communication apparatus or the second communication apparatus determines the quantity of processing time units of the PDSCH, so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete the data processing within newly defined PDSCH processing time under the impact of the late-start PDCCH candidate, ensure that the time point at which the second communication apparatus schedules the uplink feedback is not earlier than the time point at which the first communication apparatus processes the PDSCH, and ensure the robustness of the PDCCH repeated transmission.

Case 2: The start time unit of the PDSCH is determined based on a PDCCH whose start time is later.

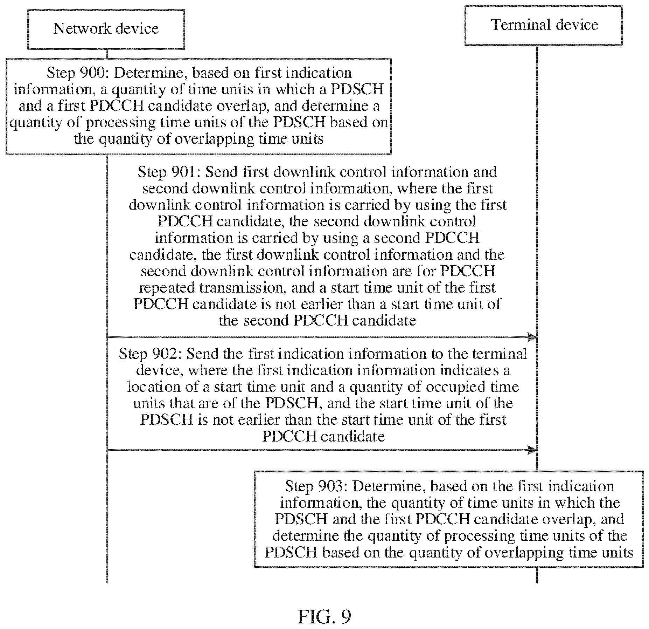

For better description of the case 1, refer to FIG. 9. FIG. 9 shows an execution procedure of a method for determining PDSCH processing time. The method may be implemented through interaction between a second communication apparatus and a first communication apparatus, or may be separately implemented by the second communication apparatus or the first communication apparatus. The second communication apparatus may be understood as a network device or a module (for example, a chip) in the network device, and the first communication apparatus may be understood as a terminal device or a module (for example, a chip) in the terminal device. This is not specifically limited in this application. In FIG. 9, only an example in which the first communication apparatus is the terminal device and the second communication apparatus is the network device is used for illustration. The following may be performed:

Step 901: The network device may send first downlink control information and second downlink control information to the terminal device, where the first downlink control information is carried by using a first PDCCH candidate, the second downlink control information is carried by using a second PDCCH candidate, the first downlink control information and the second downlink control information are for PDCCH repeated transmission, and a start time unit of the first PDCCH candidate is not earlier than a start time unit of the second PDCCH candidate. Correspondingly, the terminal device receives the first downlink control information and the second downlink control information that are from the network device.

It should be noted that, in a single-station scenario, a single-station network device sends the first downlink control information and the second downlink control information to the terminal device. In a multi-station scenario, one network device may send the first downlink control information to the terminal device, and another network device may send the second downlink control information to the terminal device.

Step 902: The network device sends first indication information to the terminal device, where the first indication information indicates a location of a start time unit and a quantity of occupied time units that are of a PDSCH, and the start time unit of the PDSCH is not earlier than the start time unit of the first PDCCH candidate. Correspondingly, the terminal device receives the first indication information from the network device.

Step 903: The terminal device determines, based on the first indication information, a quantity of time units in which the PDSCH and the first PDCCH candidate overlap, and determines a quantity of processing time units of the PDSCH based on the quantity of overlapping time units.

It should be further noted that the network device also needs to determine the quantity of processing time units of the PDSCH. However, different from an occasion at which the terminal device determines the quantity of processing time units of the PDSCH, the network device needs to determine the quantity of processing time units of the PDSCH before step 901 is performed. The following may be performed:

Step 900: The network device determines the quantity of processing time units of the PDSCH based on the quantity of time units in which the PDSCH and the first PDCCH candidate overlap.

It should be noted that in the single-station scenario, the single-station network device may perform the step of step 900 by itself. In the multi-station scenario (where it is assumed that a plurality of stations communicate with each other), a plurality of network devices may respectively perform the step of step 900, or the step may be performed by using only one network device, and another network device may not perform the step after determining that a network device that performs step 900 already exists, thereby reducing device overheads.

For understandings of the time unit, that the first downlink control information and the second downlink control information are for the PDCCH repeated transmission, and the like, refer to the descriptions of the case 1. Details are not described herein again.

In this application, the start time unit of the PDSCH is determined based on a late-start PDCCH candidate. The quantity of processing time units of the PDSCH is determined based on the quantity of time units in which the PDSCH and a late-end PDCCH candidate, that is, the first PDCCH candidate overlap. The first communication apparatus or the second communication apparatus determines the quantity of processing time units of the PDSCH, so that delay impact caused by the late-start PDCCH candidate on the PDSCH processing time is resolved. In this way, the first communication apparatus and the second communication apparatus have a consistent understanding of the quantity of processing time units of the PDSCH, to ensure that the first communication apparatus may complete data processing within newly defined PDSCH processing time under the impact of the late-start PDCCH candidate, ensure that a time point at which the second communication apparatus schedules an uplink feedback is not earlier than a time point at which the first communication apparatus processes the PDSCH, and ensure robustness of the PDCCH repeated transmission.

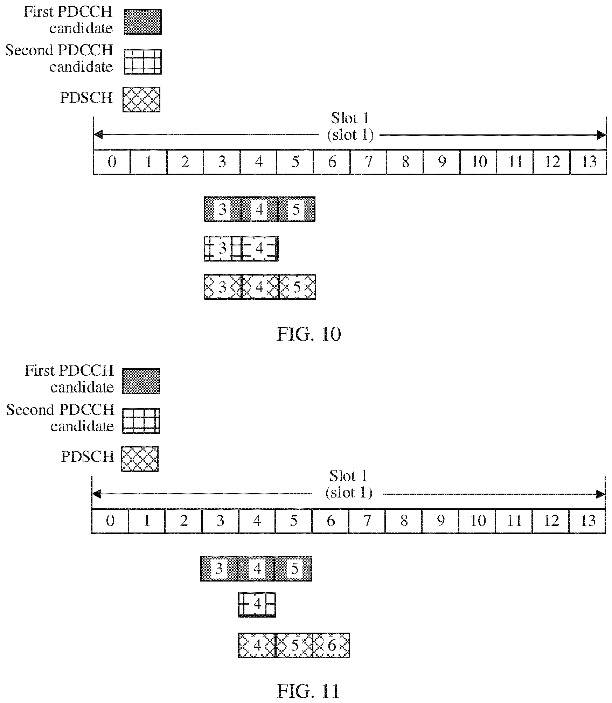

In an optional manner, a quantity of time units occupied by the first PDCCH candidate is different from a quantity of time units occupied by the second PDCCH candidate. As shown in FIG. 10, a quantity of time units occupied by the first PDCCH candidate is three OFDM symbols, and the second PDCCH candidate occupies two OFDM symbols. Because start OFDM symbols of the first PDCCH candidate and the second PDCCH candidate are the same and are OFDM symbols 3. However, end OFDM symbols of the first PDCCH candidate and the second PDCCH candidate are different. The end OFDM symbol of the first PDCCH candidate is 5, and the end OFDM symbol of the second PDCCH candidate is 4. A quantity of OFDM symbols in which the PDSCH and the PDCCH overlap may be determined based on the late-end PDCCH candidate. To be specific, when a start OFDM symbol of the PDSCH is determined based on the start OFDM symbol of the second PDCCH candidate, the quantity of OFDM symbols in which the PDSCH and the PDCCH overlap is determined based on the first PDCCH candidate. It can be learned from FIG. 10 that a quantity of time units in which the PDSCH and the first PDCCH candidate overlap is 3, and therefore a quantity of processing time units of the PDSCH is *N*₁+3.

In an optional manner, at least one time unit occupied by the first PDCCH candidate and at least one time unit occupied by the second PDCCH candidate overlap in time domain. As shown in FIG. 11, a quantity of time units occupied by the first PDCCH candidate is three OFDM symbols, and the second PDCCH candidate occupies one OFDM symbol. Start OFDM symbols of the first PDCCH candidate and the second PDCCH candidate are different, and end OFDM symbols are also different. The start OFDM symbol of the first PDCCH candidate is 3, and the end OFDM symbol is 5. The start OFDM symbol of the second PDCCH candidate is 4, and the end OFDM symbol is 4. A quantity of OFDM symbols in which the PDSCH and the PDCCH overlap may be determined based on the late-end PDCCH candidate. To be specific, when a start OFDM symbol of the PDSCH is determined based on the start OFDM symbol of the second PDCCH candidate, the quantity of OFDM symbols in which the PDSCH and the PDCCH overlap may be determined based on the first PDCCH candidate. It can be learned from FIG. 11 that a quantity of OFDM symbols in which the PDSCH and the first PDCCH candidate overlap is 2, and therefore a quantity of processing time units of the PDSCH is *N*₁+2.

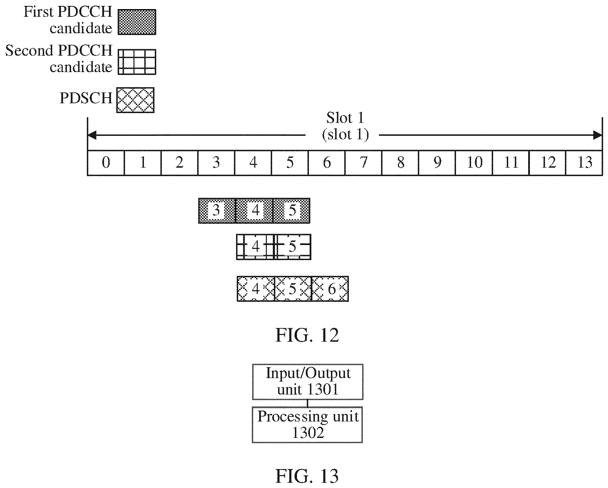

As shown in FIG. 12, a quantity of time units occupied by the first PDCCH candidate is three OFDM symbols, and the second PDCCH candidate occupies two OFDM symbols. Start OFDM symbols of the first PDCCH candidate and the second PDCCH candidate are different, but end OFDM symbols are the same. The start OFDM symbol of the first PDCCH candidate is 3, and the end OFDM symbol is 5. The start OFDM symbol of the second PDCCH candidate is 4, and the end OFDM symbol is 5. Therefore, it can be learned that the end OFDM symbols of the first PDCCH candidate and the second PDCCH candidate are the same. A quantity of OFDM symbols in which the PDSCH and the PDCCH overlap may be determined based on either of the PDCCH candidates. For example, a start OFDM symbol of the PDSCH is determined based on the start OFDM symbol of the second PDCCH candidate, and the quantity of OFDM symbols in which the PDSCH and the PDCCH overlap may be determined based on the first PDCCH candidate. It can be learned from FIG. 12 that a quantity of OFDM symbols in which the PDSCH and the first PDCCH candidate overlap is 2, and therefore a quantity of processing time units of the PDSCH is *N*₁+2*.*

In addition, it should be further noted that, in any of the foregoing cases, the terminal device needs to report PDSCH processing capability information to the network device, and the network device enables a cell to use a PDSCH processing capability. A terminal device in the cell needs to determine, based on an indication of the network device, the PDSCH processing capability that needs to be used, and determine a quantity of processing time units of a PDSCH based on *N*₁ corresponding to different PDSCH processing capabilities.

In addition, the network device may send second indication information to the terminal device. Correspondingly, the terminal device may receive the second indication information from the network device. The second indication information indicates the terminal device to send a PUCCH. The PUCCH is used to carry HARQ-ACK information of the PDSCH. If the terminal device determines, based on the quantity of processing time units of the PDSCH, that a start time unit of the PUCCH is not earlier than a time unit determined based on the quantity of processing time units of the PDSCH, the terminal device sends the HARQ-ACK information of the PDSCH based on the second indication information. If the terminal device determines, based on the quantity of processing time units of the PDSCH, that a start time unit of the PUCCH is earlier than the time unit determined based on the quantity of processing time units of the PDSCH, the terminal device does not send the HARQ-ACK information of the PDSCH.

It should be noted that the second indication information may be indicated by using the first downlink control information and/or the second downlink control information, or may be indicated by using other control information. This is not specifically limited in this application. In this manner, the first communication apparatus may determine, based on the determined quantity of processing time units of the PDSCH, whether to feed back the HARQ-ACK information based on the second indication information of the second communication apparatus. In this manner, the first communication apparatus or the second communication apparatus determines the quantity of processing time units of the PDSCH, so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete the data processing within newly defined PDSCH processing time under the impact of the late-start PDCCH candidate, ensure that the time point at which the second communication apparatus schedules the uplink feedback is not earlier than the time point at which the first communication apparatus processes the PDSCH, and ensure the robustness of the PDCCH repeated transmission.

FIG. 13 shows a communication apparatus. The communication apparatus includes an input/output unit 1301 and a processing unit 1302. The communication apparatus may be the foregoing first communication apparatus, or may be the foregoing second communication apparatus. This is not specifically limited in this application.

It should be noted that, in a single-station scenario, the second communication apparatus may be understood as a network device or a module (for example, a chip) in the network device, and the first communication apparatus may be understood as a terminal device or a module (for example, a chip) in the terminal device. In a multi-station scenario, there may be a plurality of second communication apparatuses.

When the communication apparatus is the first communication apparatus, the communication apparatus may receive, by using the input/output unit 1301, first downlink control information and second downlink control information that are from the second communication apparatus, where the first downlink control information is carried by using a first physical downlink control channel PDCCH candidate, the second downlink control information is carried by using a second PDCCH candidate, the first downlink control information and the second downlink control information are for PDCCH repeated transmission, and a start time unit of the first PDCCH candidate is not later than a start time unit of the second PDCCH candidate, and receive first indication information from the second communication apparatus, where the first indication information indicates a location of a start time unit and a quantity of occupied time units that are of a physical downlink shared channel PDSCH, and the start time unit of the PDSCH is not earlier than the start time unit of the first PDCCH candidate. The processing unit 1302 determines that a quantity of time units occupied from the location of the start time unit of the PDSCH to an end time unit of the second PDCCH candidate is L', where L' is a positive integer, and determines a quantity of processing time units of the PDSCH based on L'.

It should be noted that, in the single-station scenario, a single-station second communication apparatus may send the first downlink control information and the second downlink control information to the first communication apparatus. In the multi-station scenario, one second communication apparatus may send the first downlink control information to the first communication apparatus, and another second communication apparatus may send the second downlink control information to the first communication apparatus. That the first downlink control information and the second downlink control information are for the PDCCH repeated transmission may be understood as that the first downlink control information and the second downlink control information are for transmitting same downlink control information, may be understood as that information formats of the first downlink control information and the second downlink control information are the same, or may be understood as that the first downlink control information and the second downlink control information indicate same scheduling. For example, both are for scheduling a same PDSCH. The same PDSCH may be understood as PDSCHs with same load, PDSCHs at a same time-frequency location, or one same PDSCH. The PDCCH repeated transmission may alternatively be understood as PDCCH repeated transmission in a communication protocol. This is not limited in this application. It should be further noted that the time unit may be understood as a slot, a subframe, an OFDM symbol, or the like. This is not specifically limited in this application, and a format of the time unit may be flexibly selected with reference to an actual application.

In addition, that the start time unit of the first PDCCH candidate is not later than the start time unit of the second PDCCH candidate may be understood as that a start OFDM symbol of the first PDCCH candidate is the same as a start OFDM symbol of the second PDCCH candidate, or a start OFDM symbol of the first PDCCH candidate is before a start OFDM symbol of the second PDCCH candidate. For example, the start OFDM symbol of the first PDCCH candidate is a symbol 3, the start OFDM symbol of the second PDCCH candidate is 5, and the symbol 3 is before the symbol 5. In addition, if the start OFDM symbol of the first PDCCH candidate is the same as the start OFDM symbol of the second PDCCH candidate, it may be understood as that the first PDCCH candidate and the second PDCCH candidate overlap (where if quantities of time units occupied by the first PDCCH candidate and the second PDCCH candidate are also the same, it may be understood as that the first PDCCH candidate and the second PDCCH candidate completely overlap, or if quantities of time units occupied by the first PDCCH candidate and the second PDCCH candidate are different, it may be understood as that the first PDCCH candidate and the second PDCCH candidate partially overlap). Either of the PDCCH candidates can be used as a reference for the PDSCH to determine the start time unit.

In addition, the first indication information may alternatively be carried in the first downlink control information and the second downlink control information, for example, DCI, or may be carried in other control information, for example, RRC information. This is not specifically limited in this application. It should be further noted that the quantity of processing time units of the PDSCH may be understood as a quantity of time units occupied by the first communication apparatus to start channel estimation, data processing, and the like after the first downlink control information and the second downlink control information are demodulated. After the processing time unit of the PDSCH ends, HARQ-ACK information is fed back through a PUCCH. In addition, a start time unit of the processing time unit of the PDSCH is one or more time units after an end time unit of the PDSCH. For example, the end time unit of the PDSCH is the OFDM symbol 3, and the start time unit of the processing time unit of the PDSCH may be the OFDM symbol 5. This is merely an example for description, and is not specifically limited herein.

In this application, the start time unit of the PDSCH is determined based on an early-start PDCCH candidate. When the quantity of processing time units of the PDSCH is determined, the quantity of processing time units of the PDSCH is determined by defining the quantity of time units occupied from the location of the start time unit of the PDSCH to the end time unit of the second PDCCH candidate, so that delay impact caused by a late-start PDCCH candidate on PDSCH processing time is resolved. In this way, the first communication apparatus and the second communication apparatus have a consistent understanding of the quantity of processing time units of the PDSCH, to ensure that a time point at which the second communication apparatus schedules an uplink feedback is not earlier than a time point at which the first communication apparatus processes the PDSCH, thereby ensuring robustness of the PDCCH repeated transmission.

It should be further noted that, in the single-station scenario, the single-station second communication apparatus may determine the quantity of processing time units of the PDSCH by itself. In the multi-station scenario (where it is assumed that a plurality of stations communicate with each other), a plurality of second communication apparatuses may respectively determine the quantity of processing time units of the PDSCH, or the operation may be performed by using only one second communication apparatus, and another second communication apparatus may not perform the operation after determining that a second communication apparatus that determines the quantity of processing time units of the PDSCH already exists, thereby reducing device overheads.

In an optional manner, an end time unit of the PDSCH is not later than the end time unit of the second PDCCH candidate, and the quantity of processing time units of the PDSCH is a sum of a first preset value and L'.

It should be noted that the end time unit of the PDSCH is the same as the end time unit of the second PDCCH candidate or is before the end time unit of the second PDCCH candidate. The quantity of processing time units of the PDSCH is the sum of the first preset value and L', where the first preset value is determined based on a communication protocol specification, and is related to a capability of the terminal device. A unit of the first preset value is also a time unit, is usually N₁ in the communication protocol, and may be determined based on the communication protocol specification in the actual application. This is not specifically limited in this application. The quantity of processing time units of the PDSCH is determined by introducing L', so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete data processing within newly defined PDSCH processing time under the impact of the late-start PDCCH candidate, thereby ensuring the robustness of the PDCCH repeated transmission.

In an optional manner, the end time unit of the PDSCH is later than the end time unit of the second PDCCH candidate. Being under a first PDSCH processing capability of the first communication apparatus may alternatively be understood as that the second communication apparatus configures a configuration of disabling the first PDSCH processing capability in a serving cell. The processing unit 1302 is configured to determine the quantity of processing time units of the PDSCH based on L and L', where L is the quantity of time units occupied by the PDSCH.

In this manner, the first communication apparatus or the second communication apparatus determines the quantity of processing time units of the PDSCH, so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete the data processing within the newly defined PDSCH processing time under the impact of the late-start PDCCH candidate, ensure that the time point at which the second communication apparatus schedules the uplink feedback is not earlier than the time point at which the first communication apparatus processes the PDSCH, and ensure the robustness of the PDCCH repeated transmission.

In an optional manner, being under a second PDSCH processing capability of the first communication apparatus may alternatively be understood as that the second communication apparatus configures a configuration of enabling the second PDSCH processing capability in the serving cell. The processing unit 1302 is configured to determine the quantity of processing time units of the PDSCH based on the sum of the first preset value and L'.

In this manner, the first communication apparatus or the second communication apparatus determines the quantity of processing time units of the PDSCH, so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete the data processing within the newly defined PDSCH processing time under the impact of the late-start PDCCH candidate, ensure that the time point at which the second communication apparatus schedules the uplink feedback is not earlier than the time point at which the first communication apparatus processes the PDSCH, and ensure the robustness of the PDCCH repeated transmission.

In an optional manner, the input/output unit 1301 is further configured to: receive second indication information from the second communication apparatus, where the second indication information indicates the first communication apparatus to send the PUCCH, and the PUCCH is used to carry the HARQ-ACK information of the PDSCH; and if it is determined, based on the quantity of processing time units of the PDSCH, that a start time unit of the PUCCH is not earlier than a time unit determined based on the quantity of processing time units of the PDSCH, send the HARQ-ACK information of the PDSCH based on the second indication information; or if it is determined, based on the quantity of processing time units of the PDSCH, that a start time unit of the PUCCH is earlier than the time unit determined based on the quantity of processing time units of the PDSCH, skip sending the HARQ-ACK information of the PDSCH.

It should be noted that the second indication information may be indicated by using the first downlink control information and/or the second downlink control information, or may be indicated by using other control information. This is not specifically limited in this application. In this manner, the first communication apparatus may determine, based on the determined quantity of processing time units of the PDSCH, whether to feed back the HARQ-ACK information based on the second indication information of the second communication apparatus. In this manner, the first communication apparatus or the second communication apparatus determines the quantity of processing time units of the PDSCH, so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete the data processing within the newly defined PDSCH processing time under the impact of the late-start PDCCH candidate, ensure that the time point at which the second communication apparatus schedules the uplink feedback is not earlier than the time point at which the first communication apparatus processes the PDSCH, and ensure the robustness of the PDCCH repeated transmission.

The input/output unit 1301 of the first communication apparatus may alternatively receive first downlink control information and second downlink control information that are from the second communication apparatus, where the first downlink control information is carried by using a first physical downlink control channel PDCCH candidate, the second downlink control information is carried by using a second PDCCH candidate, the first downlink control information and the second downlink control information are for PDCCH repeated transmission, and an end time unit of the first PDCCH candidate is not earlier than an end time unit of the second PDCCH candidate, and receive first indication information from the second communication apparatus, where the first indication information indicates a location of a start time unit and a quantity of occupied time units that are of a physical downlink shared channel PDSCH, and the start time unit of the PDSCH is not earlier than a start time unit of the first PDCCH candidate. The processing unit 1302 may determine, based on the first indication information, a quantity of time units in which the PDSCH and the first PDCCH candidate overlap, and determine a quantity of processing time units of the PDSCH based on the quantity of overlapping time units.

In this application, the start time unit of the PDSCH is determined based on a late-start PDCCH candidate. The quantity of processing time units of the PDSCH is determined based on the quantity of time units in which the PDSCH and a late-end PDCCH candidate, that is, the first PDCCH candidate overlap. The first communication apparatus or the second communication apparatus determines the quantity of processing time units of the PDSCH, so that delay impact caused by the late-start PDCCH candidate on PDSCH processing time is resolved. In this way, the first communication apparatus and the second communication apparatus have a consistent understanding of the quantity of processing time units of the PDSCH, to ensure that the first communication apparatus may complete data processing within newly defined PDSCH processing time under the impact of the late-start PDCCH candidate, ensure that a time point at which the second communication apparatus schedules an uplink feedback is not earlier than a time point at which the first communication apparatus processes the PDSCH, and ensure robustness of the PDCCH repeated transmission.

In addition, it should be further noted that, in this application, a quantity of time units occupied by the first PDCCH candidate may be the same as or different from a quantity of time units occupied by the second PDCCH candidate. When the quantity of time units occupied by the first PDCCH candidate is the same as the quantity of time units occupied by the second PDCCH candidate, and start time units of the first PDCCH candidate and the second PDCCH candidate are the same, using a rule that is for determining the start location of the PDSCH and that is provided in this application can ensure that the first communication apparatus keeps consistent with the existing processing rule (where the start time unit of the PDSCH is determined based on the late-start PDCCH candidate). In this case, processing complexity is low when the first communication apparatus performs data processing. When the quantity of time units occupied by the first PDCCH candidate is different from the quantity of time units occupied by the second PDCCH candidate, the first communication apparatus may flexibly schedule HARQ-ACK information of the PDSCH.

In an optional manner, at least one time unit occupied by the first PDCCH candidate and at least one time unit occupied by the second PDCCH candidate overlap in time domain.

In an optional manner, the input/output unit 1301 may further receive second indication information from the second communication apparatus, where the second indication information indicates the first communication apparatus to send a PUCCH; and if it is determined, based on the quantity of processing time units of the PDSCH, that a start time unit of the PUCCH is not earlier than a time unit determined based on the quantity of processing time units of the PDSCH, send the PUCCH based on the second indication information; or if it is determined, based on the quantity of processing time units of the PDSCH, that a start time unit of the PUCCH is earlier than the time unit determined based on the quantity of processing time units of the PDSCH, skip sending the PUCCH.

It should be understood that the input/output unit may be referred to as a transceiver unit, a communication unit, or the like. When the communication apparatus is a terminal device, the input/output unit may be a transceiver, and the processing unit may be a processor. When the communication apparatus is a module (for example, a chip) in the terminal device, the input/output unit may be an input/output interface, an input/output circuit, an input/output pin, or the like, and may also be referred to as an interface, a communication interface, an interface circuit, or the like. The processing unit may be a processor, a processing circuit, a logic circuit, or the like.

When the communication apparatus is the second communication apparatus, the processing unit 1302 is configured to: determine that a quantity of time units occupied from a location of a start time unit of a physical downlink shared channel PDSCH to an end time unit of a second physical downlink control channel PDCCH candidate is L', where L' is a positive integer, the start time unit of the PDSCH is not earlier than a start time unit of a first PDCCH candidate, first downlink control information is carried by using the first PDCCH candidate, second downlink control information is carried by using the second PDCCH candidate, the first downlink control information and the second downlink control information are sent to the first communication apparatus for PDCCH repeated transmission, and the start time unit of the first PDCCH candidate is not later than a start time unit of the second PDCCH candidate, and determine a quantity of processing time units of the PDSCH based on L'. The input/output unit 1301 is configured to: send the first downlink control information and/or the second downlink control information to the first communication apparatus, and send first indication information to the first communication apparatus, where the first indication information indicates the location of the start time unit and a quantity of occupied time units that are of the PDSCH.

In this application, the start time unit of the PDSCH is determined based on an early-start PDCCH candidate. When the quantity of processing time units of the PDSCH is determined, the quantity of processing time units of the PDSCH is determined by defining the quantity of time units occupied from the location of the start time unit of the PDSCH to the end time unit of the second PDCCH candidate, so that delay impact caused by a late-start PDCCH candidate on PDSCH processing time is resolved. In this way, the first communication apparatus and the second communication apparatus have a consistent understanding of the quantity of processing time units of the PDSCH, to ensure that a time point at which the second communication apparatus schedules an uplink feedback is not earlier than a time point at which the first communication apparatus processes the PDSCH, thereby ensuring robustness of the PDCCH repeated transmission.

In an optional manner, an end time unit of the PDSCH is not later than the end time unit of the second PDCCH candidate, and the quantity of processing time units of the PDSCH is a sum of a first preset value and L'.

It should be noted that the end time unit of the PDSCH is the same as the end time unit of the second PDCCH candidate or is before the end time unit of the second PDCCH candidate. The quantity of processing time units of the PDSCH is the sum of the first preset value and L', where the first preset value is determined based on a communication protocol specification, and is related to a capability of the terminal device. A unit of the first preset value is also a time unit, is usually N₁ in the communication protocol, and may be determined based on the communication protocol specification in an actual application. This is not specifically limited in this application. The quantity of processing time units of the PDSCH is determined by introducing L', so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete data processing within newly defined PDSCH processing time under the impact of the late-start PDCCH candidate, thereby ensuring the robustness of the PDCCH repeated transmission.

In an optional manner, the end time unit of the PDSCH is later than the end time unit of the second PDCCH candidate. Being under a first PDSCH processing capability of the first communication apparatus may alternatively be understood as that the second communication apparatus configures a configuration of disabling the first PDSCH processing capability in a serving cell. The processing unit 1302 is configured to determine the quantity of processing time units of the PDSCH based on L and L', where L is the quantity of time units occupied by the PDSCH.

In an optional manner, being under a second PDSCH processing capability of the first communication apparatus may alternatively be understood as that the second communication apparatus configures a configuration of disabling the second PDSCH processing capability in the serving cell. The processing unit 1302 is configured to determine the quantity of processing time units of the PDSCH based on the sum of the first preset value and L'.

In this manner, the first communication apparatus or the second communication apparatus determines the quantity of processing time units of the PDSCH, so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete the data processing within the newly defined PDSCH processing time under the impact of the late-start PDCCH candidate, ensure that the time point at which the second communication apparatus schedules the uplink feedback is not earlier than the time point at which the first communication apparatus processes the PDSCH, and ensure the robustness of the PDCCH repeated transmission.

In an optional manner, the input/output unit 1301 is further configured to send second indication information to the first communication apparatus, where the second indication information indicates the first communication apparatus to send a PUCCH, a start time unit of the PUCCH is determined based on the quantity of processing time units of the PDSCH, and the PUCCH is used to carry HARQ-ACK information of the PDSCH.

It should be noted that the second indication information may be indicated by using the first downlink control information and/or the second downlink control information, or may be indicated by using other control information. This is not specifically limited in this application. In this manner, the first communication apparatus may determine, based on the determined quantity of processing time units of the PDSCH, whether to feed back the HARQ-ACK information based on the second indication information of the second communication apparatus. In this manner, the first communication apparatus or the second communication apparatus determines the quantity of processing time units of the PDSCH, so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete the data processing within the newly defined PDSCH processing time under the impact of the late-start PDCCH candidate, ensure that the time point at which the second communication apparatus schedules the uplink feedback is not earlier than the time point at which the first communication apparatus processes the PDSCH, and ensure the robustness of the PDCCH repeated transmission.

When the communication apparatus is another second communication apparatus, the processing unit 1302 is configured to determine a quantity of processing time units of a physical downlink shared channel PDSCH based on a quantity of time units in which the PDSCH and a first physical downlink control channel PDCCH candidate overlap, where a start time unit of the PDSCH is not earlier than a start time unit of the first PDCCH candidate, first downlink control information is carried by using the first PDCCH candidate, second downlink control information is carried by using a second PDCCH candidate, the first downlink control information and the second downlink control information are sent to the first communication apparatus for PDCCH repeated transmission, and an end time unit of the first PDCCH candidate is not earlier than an end time unit of the second PDCCH candidate. The input/output unit 1301 is configured to: send the first downlink control information and/or the second downlink control information to the first communication apparatus, and send first indication information to the first communication apparatus, where the first indication information indicates a location of the start time unit and a quantity of occupied time units that are of the physical downlink shared channel PDSCH.

In this application, the start time unit of the PDSCH is determined based on a late-start PDCCH candidate. The quantity of processing time units of the PDSCH is determined based on the quantity of time units in which the PDSCH and a late-end PDCCH candidate, that is, the first PDCCH candidate overlap. The first communication apparatus or the second communication apparatus determines the quantity of processing time units of the PDSCH, so that delay impact caused by the late-start PDCCH candidate on PDSCH processing time is resolved. In this way, the first communication apparatus and the second communication apparatus have a consistent understanding of the quantity of processing time units of the PDSCH, to ensure that the first communication apparatus may complete data processing within newly defined PDSCH processing time under the impact of the late-start PDCCH candidate, ensure that a time point at which the second communication apparatus schedules an uplink feedback is not earlier than a time point at which the first communication apparatus processes the PDSCH, and ensure robustness of the PDCCH repeated transmission.

In addition, it should be further noted that, in this application, a quantity of time units occupied by the first PDCCH candidate may be the same as or different from a quantity of time units occupied by the second PDCCH candidate. When the quantity of time units occupied by the first PDCCH candidate is the same as the quantity of time units occupied by the second PDCCH candidate, and start time units of the first PDCCH candidate and the second PDCCH candidate are the same, using a rule that is for determining the start location of the PDSCH and that is provided in this application can ensure that the first communication apparatus keeps consistent with the existing processing rule (where the start time unit of the PDSCH is determined based on the late-start PDCCH candidate). In this case, processing complexity is low when the first communication apparatus performs data processing. When the quantity of time units occupied by the first PDCCH candidate is different from the quantity of time units occupied by the second PDCCH candidate, the first communication apparatus may flexibly schedule HARQ-ACK information of the PDSCH.

In an optional manner, at least one time unit occupied by the first PDCCH candidate and at least one time unit occupied by the second PDCCH candidate overlap in time domain.

In an optional manner, the input/output unit 1301 is further configured to send second indication information to the first communication apparatus, where the second indication information indicates the first communication apparatus to send a PUCCH, a start time unit of the PUCCH is determined based on the quantity of processing time units of the PDSCH, and the PUCCH is used to carry the HARQ-ACK information of the PDSCH.

It should be noted that the second indication information may be indicated by using the first downlink control information and/or the second downlink control information, or may be indicated by using other control information. This is not specifically limited in this application. In this manner, the first communication apparatus may determine, based on the determined quantity of processing time units of the PDSCH, whether to feed back the HARQ-ACK information based on the second indication information of the second communication apparatus. In this manner, the first communication apparatus or the second communication apparatus determines the quantity of processing time units of the PDSCH, so that the delay impact caused by the late-start PDCCH candidate on the PDSCH processing time is resolved. In this way, the first communication apparatus and the second communication apparatus have the consistent understanding of the quantity of processing time units of the PDSCH, to ensure that the first communication apparatus may complete the data processing within the newly defined PDSCH processing time under the impact of the late-start PDCCH candidate, ensure that the time point at which the second communication apparatus schedules the uplink feedback is not earlier than the time point at which the first communication apparatus processes the PDSCH, and ensure the robustness of the PDCCH repeated transmission.

It should be understood that the input/output unit may be referred to as a transceiver unit, a communication unit, or the like. When the communication apparatus is a network device, the input/output unit may be a transceiver, and the processing unit may be a processor. When the communication apparatus is a module (for example, a chip) in the network device, the input/output unit may be an input/output interface, an input/output circuit, an input/output pin, or the like, and may also be referred to as an interface, a communication interface, an interface circuit, or the like. The processing unit may be a processor, a processing circuit, a logic circuit, or the like.

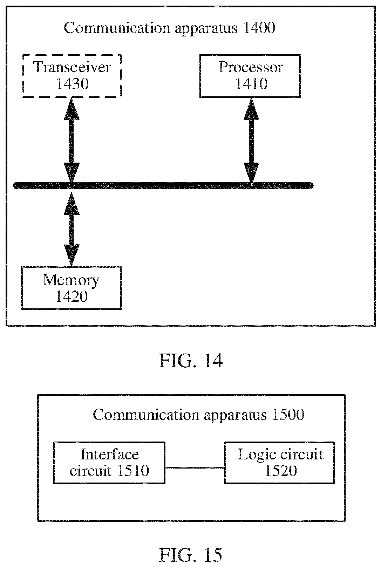

In addition, FIG. 14 shows a communication apparatus 1400 further provided in this application. For example, the communication apparatus 1400 may be a chip or a chip system. Optionally, in this embodiment of this application, the chip system may include a chip, or may include a chip and another discrete device.

The communication apparatus 1400 may include at least one processor 1410, and the communication apparatus 1400 may further include at least one memory 1420, configured to store a computer program, program instructions, and/or data. The memory 1420 is coupled to the processor 1410. The coupling in this embodiment of this application is an indirect coupling or a communication connection between apparatuses, units, or modules, may be in an electrical, mechanical, or another form, and is for information exchange between the apparatuses, the units, or the modules. The processor 1410 may operate in collaboration with the memory 1420. The processor 1410 may execute the computer program stored in the memory 1420. Optionally, the at least one memory 1420 may alternatively be integrated with the processor 1410.

Optionally, in an actual application, the communication apparatus 1400 may include a transceiver 1430 or may not include the transceiver 1430. A dashed-line box is for illustration in the figure. The communication apparatus 1400 may exchange information with another device by using the transceiver 1430. The transceiver 1430 may be a circuit, a bus, a transceiver, or any other apparatus that may be configured to exchange information.

In a possible implementation, the communication apparatus 1400 may be used in the foregoing first communication apparatus, or may be the foregoing second communication apparatus. The memory 1420 stores the necessary computer program, program instructions, and/or data for implementing a function of a relay device in any one of the foregoing embodiments. The processor 1410 may execute the computer program stored in the memory 1420, to complete the method in any one of the foregoing embodiments.

A specific connection medium between the transceiver 1430, the processor 1410, and the memory 1420 is not limited in this embodiment of this application. In this embodiment of this application, in FIG. 14, the memory 1420, the processor 1410, and the transceiver 1430 are connected by using a bus. The bus is represented by a bold line in FIG. 14. A connection manner between other components is merely an example for description, and is not limited thereto. The bus may be classified into an address bus, a data bus, a control bus, and the like. For ease of representation, only one bold line is for representation in FIG. 14, but this does not mean that there is only one bus or only one type of bus. In this embodiment of this application, the processor may be a general-purpose processor, a digital signal processor, an application-specific integrated circuit, a field programmable gate array or another programmable logic device, a discrete gate or transistor logic device, or a discrete hardware component, and may implement or perform the methods, steps, and logic block diagrams disclosed in embodiments of this application. The general-purpose processor may be a microprocessor, any conventional processor, or the like. The steps of the method disclosed with reference to embodiments of this application may be directly performed by a hardware processor, or may be performed by a combination of hardware in the processor and a software module.

In this embodiment of this application, the memory may be a non-volatile memory, for example, a hard disk drive (hard disk drive, HDD) or a solid-state drive (solid-state drive, SSD), or may be a volatile memory (volatile memory), for example, a random-access memory (random-access memory, RAM). The memory may alternatively be any other medium that can be configured to carry or store expected program code in a form of an instruction or a data structure and that can be accessed by a computer, but is not limited thereto. The memory in this embodiment of this application may alternatively be a circuit or any other apparatus that can implement a storage function, and is configured to store the computer program, the program instructions and/or the data.

Based on the foregoing embodiments, refer to FIG. 15. An embodiment of this application further provides another communication apparatus 1500, including an interface circuit 1510 and a logic circuit 1520. The interface circuit 1510 may be understood as an input/output interface, and may be configured to perform a same operation step as the input/output unit shown in FIG. 13 or the transceiver shown in FIG. 14. Details are not described herein again in this application. The logic circuit 1520 may be configured to run code instructions to perform the method in any one of the foregoing embodiments. The logic circuit 1520 may be understood as the processing unit in FIG. 13 or the processor in FIG. 14, and may implement a same function as the processing unit or the processor. Details are not described herein again in this application.

Based on the foregoing embodiments, an embodiment of this application further provides a readable storage medium. The readable storage medium stores instructions. When the instructions are executed, the method performed based on the method for determining the PDSCH processing time in any one of the foregoing embodiments is implemented. The readable storage medium may include any medium that can store program code, such as a USB flash drive, a removable hard disk, a read-only memory, a random-access memory, a magnetic disk, or an optical disc.

A person skilled in the art should understand that the embodiment of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the apparatus (system), and the computer program product according to this application. It should be understood that computer program instructions may be used to implement each procedure and/or each block in the flowcharts and/or the block diagrams and a combination of a procedure and/or a block in the flowcharts and/or the block diagrams. The computer program instructions may be provided for a general-purpose computer, a dedicated computer, an embedded processor, or a processor of another programmable data processing apparatus to generate a machine, so that instructions executed by the computer or the processor of the another programmable data processing apparatus generate an apparatus for implementing a specific function in one or more procedures in the flowcharts and/or in one or more blocks in the block diagrams.

The computer program instructions may alternatively be stored in a computer-readable memory that can instruct the computer or the another programmable data processing apparatus to work in a specific manner, so that instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing apparatus, so that a series of operation steps are performed on the computer or the another programmable apparatus to generate computer-implemented processing, and instructions executed on the computer or the another programmable apparatus provide steps for implementing a specific function in one or more procedures in the flowcharts and/or in one or more blocks in the block diagrams.

## Claims

1. A method for determining physical downlink shared channel PDSCH processing time, comprising:
receiving first downlink control information and second downlink control information that are from a network device, wherein the first downlink control information is carried by using a first physical downlink control channel PDCCH candidate, the second downlink control information is carried by using a second PDCCH candidate, the first downlink control information and the second downlink control information are same downlink control information, an end time unit of the first PDCCH candidate is not earlier than an end time unit of the second PDCCH candidate, the first downlink control information and the second downlink control information comprise first indication information, the first indication information indicates a location of a start time unit and a quantity of occupied time units that are of a PDSCH, and the start time unit of the PDSCH is determined based on a PDCCH candidate whose start time is later in the first PDCCH candidate and the second PDCCH candidate, wherein a mapping type mapping type of the PDSCH is a mapping type B; and
determining, based on the location of the start time unit and the quantity of occupied time units that are of the PDSCH, a quantity of time units in which the PDSCH and the first PDCCH candidate overlap, and determining a quantity of processing time units of the PDSCH based on the quantity of overlapping time units.

2. The method according to claim 1, wherein the method further comprises:
receiving a higher layer parameter referenceOfSLIVDCI-1-2.

3. The method according to claim 1 or 2, wherein the time unit is an orthogonal frequency division multiplexing OFDM symbol, and the PDSCH, the first downlink control information, and the second downlink control information are in a same slot.

4. The method according to any one of claims 1 to 3, wherein formats of the first downlink control information and the second downlink control information are DCI formats 1_2, and a cyclic redundancy check of the DCI format 1_2 is scrambled by one or more of the following radio network temporary identifiers: a cell radio network temporary identifier C-RNTI, a modulation coding scheme cell radio network temporary identifier MCS-C-RNTI, and a configured scheduling radio network temporary identifier CS-RNTI.

5. The method according to any one of claims 1 to 4, wherein a quantity of time units occupied by the first PDCCH candidate is different from a quantity of time units occupied by the second PDCCH candidate.

6. The method according to any one of claims 1 to 5, wherein at least one time unit occupied by the first PDCCH candidate and at least one time unit occupied by the second PDCCH candidate overlap in time domain.

7. The method according to any one of claims 1 to 6, further comprising:
receiving second indication information from the network device, wherein the second indication information indicates a terminal device to send a physical uplink control channel PUCCH, and the PUCCH is used to carry hybrid automatic repeat request HARQ-acknowledgement ACK information of the PDSCH; and
if it is determined, based on the quantity of processing time units of the PDSCH, that a start time unit of the PUCCH is not earlier than a time unit determined based on the quantity of processing time units of the PDSCH, sending the HARQ-ACK information of the PDSCH based on the second indication information; or
if it is determined, based on the quantity of processing time units of the PDSCH, that a start time unit of the PUCCH is earlier than the time unit determined based on the quantity of processing time units of the PDSCH, skipping sending the HARQ-ACK information of the PDSCH.

8. A method for determining physical downlink shared channel PDSCH processing time, comprising:
receiving first downlink control information and second downlink control information that are from a network device, wherein the first downlink control information is carried by using a first physical downlink control channel PDCCH candidate, the second downlink control information is carried by using a second PDCCH candidate, the first downlink control information and the second downlink control information are same downlink control information, and a start time unit of the first PDCCH candidate is not later than a start time unit of the second PDCCH candidate;
receiving first indication information from the network device, wherein the first indication information indicates a location of a start time unit and a quantity of occupied time units that are of a PDSCH, and the start time unit of the PDSCH is not earlier than the start time unit of the first PDCCH candidate;
determining that a quantity of time units occupied from the location of the start time unit of the PDSCH to an end time unit of the second PDCCH candidate is L', wherein L' is a positive integer; and
determining a quantity of processing time units of the PDSCH based on L'.

9. The method according to claim 8, wherein the method further comprises:
receiving a higher layer parameter referenceOfSLIVDCI-1-2.

10. The method according to claim 8 or 9, wherein the time unit is an orthogonal frequency division multiplexing OFDM symbol, and the PDSCH, the first downlink control information, and the second downlink control information are in a same slot.

11. The method according to any one of claims 8 to 10, wherein formats of the first downlink control information and the second downlink control information are DCI formats 1_2, and a cyclic redundancy check of the DCI format 1_2 is scrambled by one or more of the following radio network temporary identifiers: a cell radio network temporary identifier C-RNTI, a modulation coding scheme cell radio network temporary identifier MCS-C-RNTI, and a configured scheduling radio network temporary identifier CS-RNTI.

12. The method according to any one of claims 8 to 11, wherein an end time unit of the PDSCH is not later than the end time unit of the second PDCCH candidate, and the quantity of processing time units of the PDSCH is a sum of a first preset value and L'.

13. The method according to any one of claims 8 to 11, wherein an end time unit of the PDSCH is later than the end time unit of the second PDCCH candidate.

14. The method according to claim 13, wherein under a first PDSCH processing capability of a terminal device, the determining a quantity of processing time units of the PDSCH based on L' comprises:
determining the quantity of processing time units of the PDSCH based on L and L', wherein L is the quantity of time units occupied by the PDSCH.

15. The method according to claim 13, wherein under a second PDSCH processing capability of a terminal device, the determining a quantity of processing time units of the PDSCH based on L' comprises:
determining the quantity of processing time units of the PDSCH based on a sum of a first preset value and L'.

16. The method according to any one of claims 8 to 15, further comprising:
receiving second indication information from the network device, wherein the second indication information indicates the terminal device to send a physical uplink control channel PUCCH, and the PUCCH is used to carry hybrid automatic repeat request HARQ-acknowledgement ACK information of the PDSCH; and
if it is determined, based on the quantity of processing time units of the PDSCH, that a start time unit of the PUCCH is not earlier than a time unit determined based on the quantity of processing time units of the PDSCH, sending the HARQ-ACK information of the PDSCH based on the second indication information; or
if it is determined, based on the quantity of processing time units of the PDSCH, that a start time unit of the PUCCH is earlier than the time unit determined based on the quantity of processing time units of the PDSCH, skipping sending the HARQ-ACK information of the PDSCH.

17. A method for determining physical downlink shared channel PDSCH processing time, comprising:
determining a quantity of processing time units of a PDSCH based on a quantity of time units in which the PDSCH and a first physical downlink control channel PDCCH candidate overlap, wherein a start time unit of the PDSCH is determined based on a PDCCH candidate whose start time is later in the first PDCCH candidate and a second PDCCH candidate, wherein the first PDCCH candidate carries first downlink control information, the second PDCCH candidate carries second downlink control information, the first downlink control information and the second downlink control information are same downlink control information, an end time unit of the first PDCCH candidate is not earlier than an end time unit of the second PDCCH candidate, the first downlink control information and the second downlink control information comprise first indication information, and the first indication information indicates a location of the start time unit and a quantity of occupied time units that are of the PDSCH, wherein a mapping type mapping type of the PDSCH is a mapping type B; and
sending the first downlink control information and/or the second downlink control information to a terminal device.

18. The method according to claim 17, wherein the method further comprises:
sending a higher layer parameter referenceOfSLIVDCI-1-2.

19. The method according to claim 17 or 18, wherein the time unit is an orthogonal frequency division multiplexing OFDM symbol, and the PDSCH, the first downlink control information, and the second downlink control information are in a same slot.

20. The method according to any one of claims 17 to 19, wherein formats of the first downlink control information and the second downlink control information are DCI formats 1_2, and a cyclic redundancy check of the DCI format 1_2 is scrambled by one or more of the following radio network temporary identifiers: a cell radio network temporary identifier C-RNTI, a modulation coding scheme cell radio network temporary identifier MCS-C-RNTI, and a configured scheduling radio network temporary identifier CS-RNTI.

21. The method according to any one of claims 17 to 20, wherein a quantity of time units occupied by the first PDCCH candidate is different from a quantity of time units occupied by the second PDCCH candidate.

22. The method according to any one of claims 17 to 21, wherein at least one time unit occupied by the first PDCCH candidate and at least one time unit occupied by the second PDCCH candidate overlap in time domain.

23. The method according to any one of claims 17 to 22, further comprising:
sending second indication information to the terminal device, wherein the second indication information indicates the terminal device to send a physical uplink control channel PUCCH, a start time unit of the PUCCH is determined based on the quantity of processing time units of the PDSCH, and the PUCCH is used to carry hybrid automatic repeat request HARQ-acknowledgement ACK information of the PDSCH.

24. A method for determining physical downlink shared channel PDSCH processing time, comprising:
determining that a quantity of time units occupied from a location of a start time unit of a PDSCH to an end time unit of a second physical downlink control channel PDCCH candidate is L', wherein L' is a positive integer, the start time unit of the PDSCH is not earlier than a start time unit of a first PDCCH candidate, first downlink control information is carried by using the first PDCCH candidate, second downlink control information is carried by using the second PDCCH candidate, the first downlink control information and the second downlink control information are sent to a terminal device and are same downlink control information, and the start time unit of the first PDCCH candidate is not later than a start time unit of the second PDCCH candidate;
determining a quantity of processing time units of the PDSCH based on L';
sending the first downlink control information and/or the second downlink control information to the terminal device; and
sending first indication information to the terminal device, wherein the first indication information indicates the location of the start time unit and a quantity of occupied time units that are of the PDSCH.

25. The method according to claim 24, wherein the method further comprises:
sending a higher layer parameter referenceOfSLIVDCI-1-2.

26. The method according to claim 24 or 25, wherein the time unit is an orthogonal frequency division multiplexing OFDM symbol, and the PDSCH, the first downlink control information, and the second downlink control information are in a same slot.

27. The method according to any one of claims 24 to 26, wherein formats of the first downlink control information and the second downlink control information are DCI formats 1_2, and a cyclic redundancy check of the DCI format 1_2 is scrambled by one or more of the following radio network temporary identifiers: a cell radio network temporary identifier C-RNTI, a modulation coding scheme cell radio network temporary identifier MCS-C-RNTI, and a configured scheduling radio network temporary identifier CS-RNTI.

28. The method according to any one of claims 24 to 27, wherein an end time unit of the PDSCH is not later than the end time unit of the second PDCCH candidate, and the quantity of processing time units of the PDSCH is a sum of a first preset value and L'.

29. The method according to any one of claims 24 to 28, wherein the end time unit of the PDSCH is later than the end time unit of the second PDCCH candidate.

30. The method according to claim 29, wherein under a first PDSCH processing capability of the terminal device, the determining a quantity of processing time units of the PDSCH based on L' comprises:
determining the quantity of processing time units of the PDSCH based on L and L', wherein L is the quantity of time units occupied by the PDSCH.

31. The method according to claim 29, wherein under a second PDSCH processing capability of the terminal device, the determining a quantity of processing time units of the PDSCH based on L' comprises:
determining the quantity of processing time units of the PDSCH based on the sum of the first preset value and L'.

32. The method according to any one of claims 24 to 31, further comprising:
sending second indication information to the terminal device, wherein the second indication information indicates the terminal device to send a physical uplink control channel PUCCH, a start time unit of the PUCCH is determined based on the quantity of processing time units of the PDSCH, and the PUCCH is used to carry hybrid automatic repeat request HARQ-acknowledgement ACK information of the PDSCH.

33. A communication apparatus, comprising:
an input/output unit, configured to receive first downlink control information and second downlink control information that are from a network device, wherein the first downlink control information is carried by using a first physical downlink control channel PDCCH candidate, the second downlink control information is carried by using a second PDCCH candidate, the first downlink control information and the second downlink control information are same downlink control information, an end time unit of the first PDCCH candidate is not earlier than an end time unit of the second PDCCH candidate, the first downlink control information and the second downlink control information comprise first indication information, the first indication information indicates a location of a start time unit and a quantity of occupied time units that are of a PDSCH, and the start time unit of the PDSCH is determined based on a PDCCH candidate whose start time is later in the first PDCCH candidate and the second PDCCH candidate, wherein a mapping type mapping type of the PDSCH is a mapping type B; and
a processing unit, configured to: determine, based on the location of the start time unit and the quantity of occupied time units that are of the PDSCH, a quantity of time units in which the PDSCH and the first PDCCH candidate overlap, and determine a quantity of processing time units of the PDSCH based on the quantity of overlapping time units.

34. The apparatus according to claim 33, wherein the input/output unit is further configured to:
receive a higher layer parameter referenceOfSLIVDCI-1-2.

35. The apparatus according to claim 33 or 34, wherein the time unit is an orthogonal frequency division multiplexing OFDM symbol, and the PDSCH, the first downlink control information, and the second downlink control information are in a same slot.

36. The apparatus according to any one of claims 33 to 35, wherein formats of the first downlink control information and the second downlink control information are DCI formats 1_2, and a cyclic redundancy check of the DCI format 1_2 is scrambled by one or more of the following radio network temporary identifiers: a cell radio network temporary identifier C-RNTI, a modulation coding scheme cell radio network temporary identifier MCS-C-RNTI, and a configured scheduling radio network temporary identifier CS-RNTI.

37. The apparatus according to any one of claims 33 to 36, wherein a quantity of time units occupied by the first PDCCH candidate is different from a quantity of time units occupied by the second PDCCH candidate.

38. The apparatus according to any one of claims 33 to 37, wherein at least one time unit occupied by the first PDCCH candidate and at least one time unit occupied by the second PDCCH candidate overlap in time domain.

39. The apparatus according to any one of claims 33 to 38, wherein the input/output unit is further configured to:
receive second indication information from the network device, wherein the second indication information indicates a terminal device to send a physical uplink control channel PUCCH, and the PUCCH is used to carry hybrid automatic repeat request HARQ-acknowledgement ACK information of the PDSCH; and
if it is determined, based on the quantity of processing time units of the PDSCH, that a start time unit of the PUCCH is not earlier than a time unit determined based on the quantity of processing time units of the PDSCH, send the HARQ-ACK information of the PDSCH based on the second indication information; or
if it is determined, based on the quantity of processing time units of the PDSCH, that a start time unit of the PUCCH is earlier than the time unit determined based on the quantity of processing time unit of the PDSCH, skip sending the HARQ-ACK information of the PDSCH.

40. A communication apparatus, comprising:
an input/output unit, configured to: receive first downlink control information and second downlink control information that are from a network device, wherein the first downlink control information is carried by using a first physical downlink control channel PDCCH candidate, the second downlink control information is carried by using a second PDCCH candidate, the first downlink control information and the second downlink control information are same downlink control information, and a start time unit of the first PDCCH candidate is not later than a start time unit of the second PDCCH candidate, and receive first indication information from the network device, wherein the first indication information indicates a location of a start time unit and a quantity of occupied time units that are of a PDSCH, and the start time unit of the PDSCH is not earlier than the start time unit of the first PDCCH candidate; and
a processing unit, configured to: determine that a quantity of time units occupied from the location of the start time unit of the PDSCH to an end time unit of the second PDCCH candidate is L', wherein L' is a positive integer, and determine a quantity of processing time units of the PDSCH based on L'.

41. The apparatus according to claim 40, wherein the input/output unit is further configured to:
receive a higher layer parameter referenceOfSLIVDCI-1-2.

42. The apparatus according to claim 40 or 41, wherein the time unit is an orthogonal frequency division multiplexing OFDM symbol, and the PDSCH, the first downlink control information, and the second downlink control information are in a same slot.

43. The apparatus according to any one of claims 40 to 42, wherein formats of the first downlink control information and the second downlink control information are DCI formats 1_2, and a cyclic redundancy check of the DCI format 1_2 is scrambled by one or more of the following radio network temporary identifiers: a cell radio network temporary identifier C-RNTI, a modulation coding scheme cell radio network temporary identifier MCS-C-RNTI, and a configured scheduling radio network temporary identifier CS-RNTI.

44. The apparatus according to any one of claims 40 to 43, wherein an end time unit of the PDSCH is not later than the end time unit of the second PDCCH candidate, and the quantity of processing time units of the PDSCH is a sum of a first preset value and L'.

45. The apparatus according to any one of claims 40 to 44, wherein the end time unit of the PDSCH is later than the end time unit of the second PDCCH candidate.

46. The apparatus according to claim 45, wherein under a first PDSCH processing capability of a terminal device, the processing unit is specifically configured to:
determine the quantity of processing time units of the PDSCH based on L and L', wherein L is the quantity of time units occupied by the PDSCH.

47. The apparatus according to claim 45, wherein under a second PDSCH processing capability of a terminal device, the processing unit is specifically configured to:
determine the quantity of processing time units of the PDSCH based on the sum of the first preset value and L'.

48. The apparatus according to any one of claims 40 to 47, wherein the input/output unit is further configured to:
receive second indication information from the network device, wherein the second indication information indicates the terminal device to send a physical uplink control channel PUCCH, and the PUCCH is used to carry hybrid automatic repeat request HARQ-acknowledgement ACK information of the PDSCH; and
if it is determined, based on the quantity of processing time units of the PDSCH, that a start time unit of the PUCCH is not earlier than a time unit determined based on the quantity of processing time units of the PDSCH, send the HARQ-ACK information of the PDSCH based on the second indication information; or
if it is determined, based on the quantity of processing time units of the PDSCH, that a start time unit of the PUCCH is earlier than the time unit determined based on the quantity of processing time units of the PDSCH, skip sending the HARQ-ACK information of the PDSCH.

49. The apparatus according to any one of claims 40 to 48, wherein the input/output unit is a transceiver, and the processing unit is a processor.

50. A communication apparatus, comprising:
a processing unit, configured to determine a quantity of processing time units of a PDSCH based on a quantity of time units in which the PDSCH and a first physical downlink control channel PDCCH candidate overlap, wherein a start time unit of the PDSCH is determined based on a PDCCH candidate whose start time is later in the first PDCCH candidate and a second PDCCH candidate, wherein the first PDCCH candidate carries first downlink control information, the second PDCCH candidate carries second downlink control information, the first downlink control information and the second downlink control information are same downlink control information, an end time unit of the first PDCCH candidate is not earlier than an end time unit of the second PDCCH candidate, the first downlink control information and the second downlink control information comprise first indication information, and the first indication information indicates a location of the start time unit and a quantity of occupied time units that are of the PDSCH, wherein a mapping type mapping type of the PDSCH is a mapping type B; and
an input/output unit, configured to send the first downlink control information and/or the second downlink control information to a terminal device.

51. The apparatus according to claim 50, wherein the input/output unit is further configured to:
send a higher layer parameter referenceOfSLIVDCI-1-2.

52. The apparatus according to claim 50 or 51, wherein the time unit is an orthogonal frequency division multiplexing OFDM symbol, and the PDSCH, the first downlink control information, and the second downlink control information are in a same slot.

53. The apparatus according to any one of claims 50 to 52, wherein formats of the first downlink control information and the second downlink control information are DCI formats 1_2, and a cyclic redundancy check of the DCI format 1_2 is scrambled by one or more of the following radio network temporary identifiers: a cell radio network temporary identifier C-RNTI, a modulation coding scheme cell radio network temporary identifier MCS-C-RNTI, and a configured scheduling radio network temporary identifier CS-RNTI.

54. The apparatus according to any one of claims 50 to 53, wherein a quantity of time units occupied by the first PDCCH candidate is different from a quantity of time units occupied by the second PDCCH candidate.

55. The apparatus according to any one of claims 50 to 54, wherein at least one time unit occupied by the first PDCCH candidate and at least one time unit occupied by the second PDCCH candidate overlap in time domain.

56. The apparatus according to any one of claims 50 to 55, wherein the input/output unit is further configured to:
send second indication information to the terminal device, wherein the second indication information indicates the terminal device to send a physical uplink control channel PUCCH, a start time unit of the PUCCH is determined based on the quantity of processing time units of the PDSCH, and the PUCCH is used to carry hybrid automatic repeat request HARQ-acknowledgement ACK information of the PDSCH.

57. The apparatus according to any one of claims 50 to 56, wherein the input/output unit is a transceiver, and the processing unit is a processor.

58. A communication apparatus, comprising:
a processing unit, configured to: determine that a quantity of time units occupied from a location of a start time unit of a PDSCH to an end time unit of a second physical downlink control channel PDCCH candidate is L', wherein L' is a positive integer, the start time unit of the PDSCH is not earlier than a start time unit of a first PDCCH candidate, first downlink control information is carried by using the first PDCCH candidate, second downlink control information is carried by using the second PDCCH candidate, the first downlink control information and the second downlink control information are sent to a terminal device and are same downlink control information, and the start time unit of the first PDCCH candidate is not later than a start time unit of the second PDCCH candidate, and determine a quantity of processing time units of the PDSCH based on L'; and
an input/output unit, configured to: send the first downlink control information and/or the second downlink control information to the terminal device, and send first indication information to the terminal device, wherein the first indication information indicates the location of the start time unit and a quantity of occupied time units that are of the PDSCH.

59. The apparatus according to claim 58, wherein the input/output unit is further configured to:
send a higher layer parameter referenceOfSLIVDCI-1-2.

60. The apparatus according to claim 58 or 59, wherein the time unit is an orthogonal frequency division multiplexing OFDM symbol, and the PDSCH, the first downlink control information, and the second downlink control information are in a same slot.

61. The apparatus according to any one of claims 58 to 60, wherein formats of the first downlink control information and the second downlink control information are DCI formats 1_2, and a cyclic redundancy check of the DCI format 1_2 is scrambled by one or more of the following radio network temporary identifiers: a cell radio network temporary identifier C-RNTI, a modulation coding scheme cell radio network temporary identifier MCS-C-RNTI, and a configured scheduling radio network temporary identifier CS-RNTI.

62. The apparatus according to any one of claims 58 to 61, wherein an end time unit of the PDSCH is not later than the end time unit of the second PDCCH candidate, and the quantity of processing time units of the PDSCH is a sum of a first preset value and L'.

63. The apparatus according to any one of claims 58 to 62, wherein the end time unit of the PDSCH is later than the end time unit of the second PDCCH candidate.

64. The apparatus according to claim 63, wherein under a first PDSCH processing capability of the terminal device, the processing unit is specifically configured to:
determine the quantity of processing time units of the PDSCH based on L and L', wherein L is the quantity of time units occupied by the PDSCH.

65. The apparatus according to claim 63, wherein under a second PDSCH processing capability of the terminal device, the processing unit is specifically configured to:
determine the quantity of processing time units of the PDSCH based on the sum of the first preset value and L'.

66. The apparatus according to any one of claims 58 to 65, wherein the input/output unit is further configured to:
send second indication information to the terminal device, wherein the second indication information indicates the terminal device to send a physical uplink control channel PUCCH, a start time unit of the PUCCH is determined based on the quantity of processing time units of the PDSCH, and the PUCCH is used to carry hybrid automatic repeat request HARQ-acknowledgement ACK information of the PDSCH.

67. A communication apparatus, comprising at least one processor and a memory, wherein
the memory is configured to store a computer program or instructions; and
the at least one processor is configured to execute the computer program or the instructions, so that the method according to any one of claims 1 to 16 or any one of claims 17 to 32 is performed.

68. A communication apparatus, comprising at least one processor, wherein
the at least one processor is configured to execute a computer program or instructions stored in a memory, so that the method according to any one of claims 1 to 16 or any one of claims 17 to 32 is performed.

69. A computer-readable storage medium, wherein the computer-readable storage medium stores instructions, and when the instructions are executed by a computer, the method according to any one of claims 1 to 16 or any one of claims 17 to 32 is performed.

70. A computer program product comprising a computer program or instructions, wherein when the computer program product runs on a computer, the method according to any one of claims 1 to 16 or any one of claims 17 to 32 is performed.
